(19) Europäisches Patentamt
European Patent Office
Office européen des brevets

(11) **EP 2 603 787 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(51) Int Cl.:
**G01N 21/31** *(2006.01)*    **G01N 21/47** *(2006.01)*

(21) Anmeldenummer: **11743471.2**

(86) Internationale Anmeldenummer:
**PCT/EP2011/062102**

(22) Anmeldetag: **14.07.2011**

(87) Internationale Veröffentlichungsnummer:
**WO 2012/019863 (16.02.2012 Gazette 2012/07)**

(54) **SENSORSYSTEM UND VERFAHREN ZUR BESTIMMUNG EINER OPTISCHEN EIGENSCHAFT EINER PFLANZE**

SENSOR SYSTEM AND METHOD FOR DETERMINING AN OPTICAL PROPERTY OF A PLANT

SYSTÈME DE CAPTEURS ET PROCÉDÉ DE DÉTERMINATION D'UNE PROPRIÉTÉ OPTIQUE D'UNE PLANTE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **13.08.2010  DE 102010034603**

(43) Veröffentlichungstag der Anmeldung:
**19.06.2013  Patentblatt 2013/25**

(73) Patentinhaber: **Franke GmbH
73431 Aalen (DE)**

(72) Erfinder:
• **GROZ, Daniel
73431 Aalen (DE)**
• **DITTMAR, Guenter
73433 Aalen (DE)**

(74) Vertreter: **Witte, Weller & Partner Patentanwälte mbB
Postfach 10 54 62
70047 Stuttgart (DE)**

(56) Entgegenhaltungen:
**WO-A1-94/02812      WO-A1-02/088679
WO-A1-2006/007883    WO-A2-2007/062196
JP-A- 2004 294 075   US-A- 4 804 850
US-A- 5 837 997      US-A1- 2005 098 713**

• **LI ET AL: "Estimating N status of winter wheat using a handheld spectrometer in the North China Plain", FIELD CROPS RESEARCH, ELSEVIER, AMSTERDAM, NL, Bd. 106, Nr. 1, 18. Dezember 2007 (2007-12-18), Seiten 77-85, XP022392404, ISSN: 0378-4290, DOI: 10.1016/J.FCR.2007.11.001**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Sensorsystem zur Bestimmung einer optischen Eigenschaft, insbesondere des Chlorophyllgehalts oder eines Krankheits- oder Schädlingsbefalls, einer Pflanze oder eines Blattes mittels einer Reflexionsmessung, mit einer ersten Lichtquelle, die Licht entlang einer ersten Strahlachse ausstrahlt, und einer zweiten Lichtquelle, die Licht entlang einer zweiten Strahlachse ausstrahlt, und mindestens einem ersten Empfänger, der entlang einer dritten Strahlachse ausgerichtet ist, um von der Pflanze reflektiertes Licht zu erfassen.

Des Weiteren betrifft die vorliegende Erfindung ein entsprechendes Verfahren zur Bestimmung einer optischen Eigenschaft einer Pflanze, insbesondere des Chlorophyllgehalts oder eines Krankheits- oder Schädlingsbefalls .

Letztlich betrifft die vorliegende Erfindung ein Verfahren zur Auswertung einer Messung zur Bestimmung einer optischen Eigenschaft einer Pflanze, insbesondere des Chlorophyllgehalts oder eines Krankheits- oder Schädlingsbefalls.

Die Düngung von grünen Pflanzen mit Stickstoff ist in der Landwirtschaft weit verbreitet. Während der Photosynthese wird Stickstoff unter anderem dazu verwendet, Eiweiße herzustellen. Auf diese Weise fördert der Stickstoff das Wachstum der Pflanzen. Um den Pflanzen die Aufnahme des Stickstoffs zu ermöglichen, wird mit einem Ammonium- oder Nitrat-Salz gedüngt. Dabei hat der Landwirt auf einen optimalen Stickstoffgehalt der Pflanzen zu achten, da sowohl ein Mangel an Stickstoff als auch ein Überschuss an Stickstoff die Entwicklung der Pflanzen beeinträchtigen kann. Ein Mangel an Stickstoff drückt sich gewöhnlicherweise in einem kümmerlichen Wuchs, einer blassgrünen Farbe der Blätter, einem zu frühen Blühen und Vergilbungen der Pflanze aus. Ein Stickstoffüberschuss kann zu einem mastigen Wuchs, dunkelgrünen Blättern, einer verzögerten Blüte und einem schwammigen und weichen Blattgewebe führen. Darüber hinaus sind Pflanzen mit Stickstoffüberschuss häufig frost- und krankheitsanfällig. Für Landwirte ist es daher wünschenswert, den Stickstoffgehalt der Pflanzen auf einem Feld messen zu können, um eine Entscheidung über die vorzunehmende Düngung zu treffen. Darüber hinaus kann so auch vermieden werden, dass der Boden und das Grundwasser mit zuviel Dünger belastet werden.

Insbesondere ist dabei erwünscht, den Stickstoffgehalt berührungslos bestimmen zu können. Verfahren, bei denen Pflanzenteile in Messapparaturen eingespannt oder Pflanzen zerkleinert und mittels chemischer Verfahren ausgewertet werden, sind für den täglichen Gebrauch und den Einsatz auf dem Feld zu umständlich und zeitaufwändig. Ein Beispiel hierfür findet sich in der Druckschrift US 2008 0239293 A1. Am Markt besteht daher lediglich ein Bedarf an berührungslosen, insbesondere optischen, Messverfahren.

Stickstoffatome zeigen keine Absorptionsbanden für optische Strahlung. Der Stickstoffgehalt in der Pflanze kann somit nur über einen Umweg bestimmt werden. Aufgrund des engen Zusammenhangs zwischen dem Stickstoffgehalt einer Pflanze und dem Chlorophyllgehalt einer Pflanze wird der Stickstoffgehalt mittelbar über den Chlorophyllgehalt der Pflanze bestimmt. Der Chlorophyllgehalt von Pflanzen korreliert stark mit Proteinen des Photosystems, die die Mehrheit des Pflanzenstickstoffs enthalten, so dass nach einer Bestimmung des Chlorophyllgehalts auf den Stickstoffgehalt einer Pflanze rückgeschlossen werden kann.

Zur Bestimmung des Chlorophyllgehalts wiederum sind verschiedene optische Verfahren bekannt.

Weit verbreitet ist eine Fluoreszenz-Messung zur Bestimmung des Chlorophyllgehalts. Hierbei misst ein Sensor eine kurzzeitige spontane Emission von Fluoreszenz-Strahlung als Antwort auf eine blitzartige Bestrahlung der Blätter. Bei dieser regt eine Bestrahlungseinrichtung mit wiederholten Laserblitzen die Moleküle in den Blättern im photosynthetisch aktiven Bereich an. Diese Messart wird auch laserinduzierte Fluoreszenz (LIF) genannt. Die Bestrahlung erfolgt mit kurzwelliger energiereicher Strahlung, beispielsweise Licht in einem orangen Wellenlängenbereich. Die Antwort der chlorophyllhaltigen Blätter ist eine energieärmere Strahlung mit etwas größerer Wellenlänge als das Anregungslicht, zum Beispiel Strahlung im nahen Infrarotbereich. Aus der spektralen Zusammensetzung des Fluoreszenzlichtes können Rückschlüsse auf den Chlorophyllgehalt der Pflanze gezogen werden. Nachteilig an der Fluoreszenzmessung ist jedoch, dass die Messung nur an lebenden Pflanzen durchgeführt werden kann. Zwar ist dies in der Praxis auf dem Feld nicht kritisch, es hat jedoch zur Folge, dass beispielsweise eine Kalibration der Sensoren zur Erfassung des Chlorophyllgehalts an lebenden Pflanzen durchgeführt werden muss. Alternativ können beispielsweise keine mit einer bestimmten Farbe bestrichenen Platten verwendet werden, wobei die Farbe einem bestimmten Chlorophyllgehalt einer bestimmten Pflanze entsprechen soll, um die Kalibration vorzunehmen.

Des Weiteren ändern sich die Fluoreszenzeigenschaften von Pflanzen über den Tagesverlauf. Fluoreszenzmessungen müssen daher stets in einem vorgegebenen Zeitfenster (beispielsweise zwischen 11:00 Uhr und 12:00 Uhr) durchgeführt werden, damit die Kalibration und entsprechende Berechnungsalgorithmen zutreffen. Beispiele für die Bestimmung des Chlorophyllgehalts einer Pflanze mittels Fluoreszenzmessung finden sich etwa in den Druckschriften EP 1 125 111 B1 und DE 60 306 675 T2.

Des Weiteren ist die Reflexionsmessung zur Bestimmung des Chlorophyllgehalts bekannt. Dabei wird ein Lichtstrahl mit definierter Leistung auf die Pflanze gestrahlt. Die Leistung des von der Pflanze reflektierten Anteils des Lichtstrahls wird gemessen und in ein Verhältnis zu der aufgestrahlten Leistung gesetzt.

Dabei existieren sogenannte passive optische Reflexionsverfahren, bei denen als Strahlungsquelle das Tageslicht genutzt wird. Die Sonne ist jedoch ein Gleichlichtstrahler, dessen Lichtstärke sich im Verhältnis von mehr als 100.000 : 1 während des Tagesverlaufs ändert. Somit liefern Sensoren, die passive optische Reflexionsverfahren anwenden, wiederum sonnenstands- bzw. tageszeitabhängige Messwerte.

Daher wurden sogenannte aktive optische Reflexionsverfahren entwickelt, die künstliche optische Quellen, wie Lampen, LEDs oder Laser, zur Bestrahlung von Pflanzenteilen verwenden. Der von den Pflanzen reflektierte Strahlungsanteil wird in einem oder mehreren Wellenlängenbereichen ausgewertet und mit Referenzwerten verglichen. Wenn man grüne Blätter mit Licht bestrahlt, absorbieren sie in starkem Maße das blaue Licht in einem Wellenlängenbereich von unter 480 nm und das rote Licht in einem Wellenlängenbereich von 650 bis 680 nm. Dies hat zur Folge, dass die Reflexion von blauem und von rotem Licht schon bei geringem Chlorophyllgehalt saturiert. Licht um 550 nm und Strahlung in einem Rot- bis Infrarotbereich von etwa 700 bis 730 nm werden dagegen stärker reflektiert, was zur Folge hat, dass sie erst bei einem sehr hohen Chlorophyllgehalt saturieren. Je höher der Chlorophyllgehalt ist, umso geringer ist die Reflexion bei Wellenlängen um 550 nm und im Wellenlängenbereich von 700 bis 730 nm.

Die Reflexionswerte sind stark vom Winkel zwischen der Normalen des Blattes und der Einstrahlrichtung abhängig. Zur Bestimmung des absoluten Chlorophyllgehalts benötigt man daher einen Vergleichswert, den man aus der Reflexion von rotem Licht erhält. Die optische Leistung in dem Spektralbereich des roten Lichts, das heißt in einem Wellenlängenbereich von 650 nm bis 680 nm, wird nur in geringem Maße von der Pflanze reflektiert, und die Reflexion dieses reflektierten roten Lichts ist nur gering abhängig von dem Chlorophyllgehalt des Blattes.

Zur Bestimmung des Chlorophyllgehalts werden daher mindestens zwei Reflexionsgrade bei unterschiedlichen Wellenlängen bestimmt. Zuerst wird der Reflexionsgrad bei einer Wellenlänge bestimmt, bei der die Reflexion stark vom Chlorophyllgehalt abhängt, zum Beispiel bei grünem Licht. Dieser chlorophyllabhängige Reflexionsgrad wird mit einem Reflexionsgrad verglichen, der in einem Wellenlängenbereich gemessen wurde, der weitgehend unabhängig von dem Chlorophyllgehalt der Pflanze ist. Beide Reflexionsgrade werden in ein Verhältnis gesetzt und bilden einen sogenannten Vegetationsindex, der nach einer Vielzahl von bisher vorgeschlagenen Formeln berechnet werden kann. Ein Beispiel ist die Formel für den NDVI mit

$$NDVI = \frac{\rho_{grün} - \rho_{rot}}{\rho_{grün} + \rho_{rot}}.$$

Ein steigender Chlorophyll-Gehalt in den Blättern führt zu einer Abnahme des NDVI-Wertes und damit zu einem fallenden Skalenwert. Bei Sensorsystemen, die diesen NDVI-Wert einer Bedienperson anzeigen, muss die Bedienperson so ständig Umdenken, da nicht ein höherer, sondern ein niedrigerer NDVI-Wert ein besseres Ergebnis bedeutet. Die NDVI-Werte für stark chlorophyllhaltigen Blätter liegen bei sehr kleinen Zahlenwerten von ca. +0,2 und steigen mit abnehmenden Chlorophyllanteil auf +0, 6.

Die vorliegende Erfindung beschäftigt sich ausschließlich mit Sensoren, die mit einem aktiven optischen Reflexionsverfahren arbeiten.

Auf dem Markt sind eine Vielzahl von Sensoren zur Messung des Chlorophyllgehalts bekannt, die entweder derart klein ausgeführt sind, dass sie von einer Person in der Hand gehalten werden können, oder aber größere Ausmaße aufweisen, um beispielsweise auf einem Traktor montiert eingesetzt werden zu können.

Die Messfelder der Sensoren sind unterschiedlich groß und werden durch die optischen Bedingungen festgelegt. Sensoren mit kleineren Messfeldern weisen den Nachteil auf, dass sie alleine nicht zur schnellen Vermessung einer größeren Fläche eingesetzt werden können. Für größere Flächen ist dann eine Vielzahl von Einzelsensoren einzusetzen, um beispielsweise einen mehrere Meter breiten Streifen eines Feldes oder den Innenraum eines Gewächshauses zu überwachen. Durch die Vielzahl von notwendigen Sensoren werden derartige Anordnungen jedoch schnell sehr kostspielig.

Bei den traktorgestützten Systemen ist beispielsweise der YARA N-Sensor der Agri Con GmbH bekannt, der ein aktiv messendes Fluoreszenzverfahren anwendet. An jeder Seite des Sensors befindet sich eine Xenon-Blitzlampe, die einen Streifen von etwa 4 m Breite an jeder Seite des Traktors beleuchtet. Auch von der Firma Georg Fritzmeier GmbH & Co. ist ein unter dem Namen "MiniVeg N" vertriebener Sensor bekannt, der ein aktives Fluoreszenzverfahren verwendet. Auch hier wird ein größerer Feldstreifen aktiv beleuchtet, im Fall des MiniVeg N mit einer Vielzahl von Sensoren.

Über das angewendete Fluoreszenzverfahren hinaus weisen diese Systeme den Nachteil auf, dass sie sehr leistungsstarke Lichtquellen verwenden müssen, um die großen Messfelder gleichzeitig und gleichmäßig zu beleuchten. Diese Lichtquellen stellen nicht nur eine Gefahr für die Augensicherheit des Benutzers, das heißt der Traktorbedienperson, dar, sondern erfordern aufwändige Filtertechniken, um das Licht lediglich in einem nicht sichtbaren, aber die Pflanzen dennoch anregenden Bereich abzustrahlen, etwa im Bereich von 700 nm. Diese Sensoren sind daher sehr kostspielig.

Die Auswertung der Messergebnisse erfolgt stets über eine Mittelwertbildung. Da ein relativ großer Flächenbereich gleichzeitig bestrahlt wird, erhält man bei der Auswertung der Verfahren untrennbar und zeitgleich Messwerte der von den Pflanzen reflektierten Strahlung sowie der von dem Erdboden reflektierten Strahlung. Insbesondere in frühen Wachstumsphasen, in denen der optimale Düngungszustand zwar sehr wichtig ist, der Flächenbewuchs jedoch lediglich bei 10 % bis 20 % liegt, ist daher bei den bekannten Systemen eine relativ große Fläche möglichst schräg zu bestrahlen, um möglichst viele grüne Blattmasse und wenig Bodenfläche für eine verlässliche Mittelwertbildung vermessen zu können. Junge Pflanzen bedecken den Boden jedoch nur in einem sehr geringen Maße. Sie liegen teilweise flach auf dem Boden oder stehen nur wenige Zentimeter hoch über dem Boden. Vor der ersten und somit wichtigsten Gabe von Düngers liefern Messgeräte, die eine große Flächen senkrecht oder schräg erfassen, somit oft nur schlechte Ergebnisse.

Die Druckschriften WO 02/088679 A1, US 5,837,977 A, WO 94/02812 A1, US 4,804,850 A und US 2005/098713 A1 zeigen Systeme zum Messen von optischen Eigenschaften von Pflanzen. Des Weiteren zeigt die Druckschrift WO 2006/007833 A1 ein Thermometer zum Einsatz unter Wasser. Die Druckschrift JP 2004 294075 A zeigt ein Glukosekonzentrationsmessgerät.

Bisherige Systeme weisen also Nachteile hinsichtlich ihrer Tageslichtabhängigkeit, der Messbarkeit kleiner Pflanzen und der erforderlichen hohen Lichtleistungen auf. Es besteht daher ein Bedarf an einer verbesserten Sensoranordnung zur Bestimmung des Chlorophyllgehalts einer Pflanze, die die vorstehend beschriebenen Nachteile beseitigt.

Daher wird gemäß einem ersten Aspekt der Erfindung vorgeschlagen, das eingangs genannte Sensorsystem dahingehend weiterzubilden, dass die erste Lichtquelle, die zweite Lichtquelle und der mindestens eine erste Empfänger derart relativ zueinander angeordnet sind, dass ein jeweils entlang der ersten Strahlachse und der zweiten Strahlachse verlaufender Zielzylinder und ein entlang der dritten Strahlachse verlaufender erster Messzylinder einander in einem Messraum zumindest teilweise überlappen und die erste Strahlachse und die zweite Strahlachse jeweils einen Winkel mit der dritten Strahlachse einschließen, eine Befestigung der ersten und der zweiten Lichtquelle und des mindestens einen ersten Empfängers derart vorgesehen ist, dass die Winkel zwischen den Strahlachsen der Lichtquellen und der Strahlachse des mindestens einen Empfängers sowie ein Abstand zwischen den Lichtquellen und dem mindestens einen Empfänger eingestellt werden können, um den Messraum einzustellen, und wobei der Zielzylinder der ersten Lichtquelle und der Zielzylinder der zweiten Lichtquelle in dem Messraum jeweils einen Durchmesser von 1 mm bis 6 mm aufweisen, wobei der Messzylinder des mindestens einen Empfängers in dem Messraum einen Durchmesser von 8 mm aufweist.

Unter einer "optischen Eigenschaft" sind dabei alle unmittelbaren optischen Eigenschaften, aber auch alle mittelbar optischen Eigenschaften, d.h. aus den unmittelbaren optischen Eigenschaften ableitbare Eigenschaften, zu verstehen. Zu diesen mittelbaren optischen Eigenschaften zählen insbesondere der Chlorophyllgehalt und der Stickstoffgehalt der Pflanze. Des Weiteren zählen zu den mittelbaren optischen Eigenschaften aber auch Aussagen über den Befall von Krankheiten, Pilzen, Raupen oder anderen Schädlingen da sich diese insbesondere aus Änderungen der unmittelbaren optischen Eigenschaften ableiten lassen.

Die Begriffe "Zielzylinder" und "Messzylinder" verweisen dabei auf die ungefähre Ausbreitungsform der von der ersten Lichtquelle und der zweiten Lichtquelle ausgestrahlten Lichtstrahlen. Die Strahlbündel sollen im Wesentlichen keine Aufweitung oder nur eine sehr geringe Aufweitung haben, etwa in einem Bereich von 2 mrad. Bei geringer Aufweitung ergibt sich zwar streng genommen eine Kegelform der Strahlbündel, die Aufweitung ist jedoch so gering, dass die Strahlbündel im Wesentlichen mit unverändertem Querschnitt entlang der Strahlachsen verlaufen und sich somit im Wesentlichen eine Zylinderform eines bestrahlten Raumbereichs, der Zielzylinder, ergibt.

Es versteht sich, dass der Winkel zwischen erster und dritter sowie zweiter und dritter Strahlachse nicht Null ist. Die dritte Strahlachse ist somit nicht deckungsgleich mit der ersten und mit der zweiten Strahlachse. Die erste Strahlachse und die zweite Strahlachse können deckungsgleich sein, d.h. denselben Winkel mit der dritten Strahlachse einschließen, sie können aber auch verschiedene Winkel mit der dritten Strahlachse einschließen.

Das beschriebene Sensorsystem bietet den Vorteil, dass durch die genaue Ausrichtung des Messzylinders und der Zielzylinder ein kleiner Bereich, beispielsweise lediglich ein Ausschnitt eines Blattes einer Pflanze, mit der ersten und der zweiten Lichtquelle bestrahlt und die reflektierte Strahlung nur dieses Ausschnitts von dem mindestens einen Empfänger empfangen werden kann. Auf diese Weise kann von der flächigen Bestrahlung mehrerer Quadratmeter eines Feldes abgewichen werden, um im Wesentlichen punktartige Messungen vorzunehmen. Durch die Anordnung der Strahlachsen jeweils in einem Winkel zueinander wird es darüber hinaus möglich, die Schnittebene der Zielzylinder und des Messzylinders genau einzustellen. Beispielsweise wird es so möglich, diese auf die durchschnittliche Höhe der Blätter der zu messenden Pflanze einzustellen. Höher oder tiefer gelegene Objekte werden dann bei der Messung nicht erfasst. Auf diese Weise können besonders einfach Reflexionen anderer Objekte, beispielsweise des Bodens, Unkräuter oder anderer Bodendecker, die sich in anderen Höhenlagen befinden, von der Messung ausgeschlossen werden. Von dem Boden reflektierte Strahlung fließt nicht mehr in das Messergebnis ein, wie dies beispielsweise bei der flächigen Bestrahlung durch Laser mit hoher Leistung der Fall ist.

Auf diese Weise ist der Messraum des Sensorsystems bzw. die Lage des Messraums besonders einfach einstellbar. Der Messraum kann so auf die Blatthöhe der zu vermessenden Pflanzen eingestellt werden. Objekte, die außerhalb des Messraum liegen, das heißt davor oder dahinter, liefern keinerlei Reflexionssignale, die über dem Schwellwert bzw. innerhalb des Messwertbereichs liegen. Auf diese Weise können bereits die Bodenreflexionen oder Reflexionen von anderem Bewuchs oder zufällige, zu große Signale von höher stehenden Pflanzen elektronisch unterdrückt werden.

Dies ist insbesondere bei stationären Sensorsystemen von Vorteil, die beispielsweise auf Landfahrzeugen montiert sind. Diese Sensorsysteme messen einen großflächigen Pflanzenbewuchs, der durchgehend dieselbe Entwicklungsstufe und damit in etwa dieselbe Blatthöhe aufweist.

Bei Sensorsystemen, die als Handgeräte benutzt werden, variieren beim Messen die Abstände zu den zu messenden Pflanzenteilen. Bei diesen Handgeräten kann aber beispielsweise über das erfindungsgemäß bereitgestellte Auswertungsverfahren mittels des lnNDVI oder des $A_Q$- oder $A_{ln}$-Werts eine Aussortierung von Messwerten erfolgen, die nicht von Reflexionen von Pflanzen herrühren.

Letztlich ermöglicht das erfindungsgemäße Sensorsystem, die Zielzylinder und den Messzylinder entsprechend klein zu wählen, so dass Lichtquellen von geringer Leistung verwendet werden können. Insbesondere wird es möglich, die Leistung der verwendeten Lichtquellen so weit zu verringern, dass entsprechende Schwellwerte nicht überschritten und die Augensicherheit der Bedienperson gewährleistet ist.

Der Durchmesser des Bereichs, in dem das Sensorsystem einen Chlorophyllgehalt bestimmt, ist somit gegenüber den aus dem Stand der Technik bekannten Sensoren und Verfahren sehr gering. Es wird nicht ein Bereich von mehreren Quadratmetern gescannt und ein Mittelwert über alle erfassten Objekte wie Blattmasse, Stängel, Blüten, Erde, Steine usw. gebildet, sondern im Wesentlichen eine Punktmessung in einem einstellbaren Messabstand zum Sensorsystem und innerhalb eines einstellbaren Messraums durchgeführt. Im Betrieb können dann mehrere Hundert Punktmessungen pro Sekunde durchgeführt werden, so dass mit nahezu sicherer Wahrscheinlichkeit eine genügende Anzahl valider Messergebnisse von grünen Blättern pro überstrichener Fläche des Feldes erreicht wird.

Gemäß einem weiteren Aspekt wird vorgeschlagen, das entsprechende Verfahren derart weiterzubilden, dass die erste Lichtquelle, die zweite Lichtquelle und der mindestens eine erste Empfänger derart relativ zueinander angeordnet werden, dass ein jeweils entlang der ersten Strahlachse und der zweiten Strahlachseverlaufender Zielzylinder und ein entlang der dritten Strahlachse verlaufender erster Messzylinder einander in einem Messraum zumindest teilweise überlappen und die erste Strahlachse und die zweite Strahlachse jeweils einen Winkel mit der dritten Strahlachse einschließen, eine Befestigung der ersten und der zweiten Lichtquelle und des mindestens einen ersten Empfängers derart vorgesehen ist, dass die Winkel zwischen den Strahlachsen der Lichtquellen und der Strahlachse des mindestens einen Empfängers sowie ein Abstand zwischen den Lichtquellen und dem mindestens einen Empfänger eingestellt werden können, um den Messraum einzustellen, und wobei der Zielzylinder der ersten Lichtquelle und der Zielzylinder der zweiten Lichtquelle in dem Messraum jeweils einen Durchmesser von 1 mm bis 6 mm aufweisen, wobei der Messzylinder des mindestens einen Empfängers in dem Messraum einen Durchmesser von 8 mm aufweist.

Das erfindungsgemäße Verfahren zur Bestimmung einer optischen Eigenschaft einer Pflanze mittels Reflexionsmessung weist dieselben Vorteile wie das Sensorsystem auf.

Neben der Bestimmung eines Chlorophyll- bzw. Stickstoffgehalts kann die Bestimmung einer optischen Eigenschaft auch dazu dienen, Erkrankungen eines Pflanzenbestandes zu erkennen, wie etwa die Helminthosporium-Blattfleckenkrankheit an jungen Maisblätter, die an hellen, spindelförmigen Flecken auf den Maisblättern zu erkennen ist. Dabei handelt es sich um abgestorbenes Blattgewebe, das für die Nährstoffgewinnung der Pflanze nicht mehr zur Verfügung steht. Es kann aber beispielsweise auch der aggressive Schwarzrost-Pilz (Puccinia graminis) erkannt werden, der die weltweiten Weizenbestände bedroht. Aufgrund der relativ hohen Auflösung des vorgeschlagenen Sensorsystems ist darüber hinaus auch möglich einen Schädlingsbefall auf Blättern, zum Beispiel Raupen, Maden, Läuse, zu erkennen.

Es kann ein Verfahren zur Auswertung einer Messung zur Bestimmung einer optischen Eigenschaft, insbesondere des Chlorophyllgehalts, einer Pflanze vorgesehen sein, das den Schritt des Erfassens eines Wertepaares, das einen spektralen Reflexionskoeffizienten der Pflanze in einem grünen Wellenlängenbereich $\rho_{grün}$ und einen spektralen Reflexionskoeffizienten der Pflanze in einem roten Wellenlängenbereich $\rho_{rot}$ aufweist, und den Schritt des Bestimmens eines normalisierten logarithmischen Vegetationsindex $lnNDVI_{Blatt}$ mittels der Gleichung

$$lnNDVI_{Blatt} = ln\left(\rho_{grün} - \rho_{rot}\right) - ln\left(\rho_{rot}\right)$$

aufweist, wobei das Wertepaar zumindest dann verworfen wird, wenn der Term $ln(\rho_{grün}-\rho_{rot})$ nicht bestimmbar ist, und $lnNDVI_{Blatt}$ berechnet wird, wenn der Term $ln(\rho_{grün}-\rho_{rot})$ bestimmbar ist.

In der Literatur finden sich viele Berechnungsmethoden für einen Vegetationsindex. In der Regel wird eine Differenz der Reflexionskoeffizienten in einem ersten und in einem zweiten Wellenlängenbereich durch die Summe der Reflexionskoeffizienten geteilt. Die Reflexionskoeffizienten sind dabei gemäß der üblichen Definition in der Optik zu verstehen. Sie stellen den Quotienten aus reflektierter und eingestrahlter Leistung dar.

Mit dem vorgeschlagenen Sensorsystem werden lediglich sehr kleine Messflächen pro Messung erfasst. Entsprechend sind viele Messvorgänge vorzunehmen, um ein Areal einer bestimmten Größenordnung zu scannen.

Es wird davon ausgegangen, dass fünf valide Messwerte pro m$^2$ erlangt werden müssen, um eine vernünftige Aussage über die optische Eigenschaft, bspw. den Chlorophyllgehalt der Pflanzen oder den Befall der Blätter mit Krankheiten oder Schädlingen, in diesem Bereich machen zu können. Mit dem vorgeschlagenen Sensorsystem kann bei Blattschrägstellungen zur Strahlachse von bis zu 30° ein valider Messwert erhalten werden. Abhängig von der Optik des Empfängers, der Messgeschwindigkeit sowie der Vorschub- bzw. Fahrgeschwindigkeit des Sensorsystems kann alle 2 mm ein Wertepaar erfasst werden. Das heißt, es wird alle 2 mm ein Wertepaar erfasst. Somit können derart viele Messwerte aufgenommen werden, dass mit ausreichend großer Wahrscheinlichkeit zumindest fünf valide Messwerte pro m$^2$ gegeben sind. Bei einer derartigen Anzahl von Messungen muss jedoch nicht nur ein entsprechendes Sensorsystem bereitgestellt sein, es muss auch ein möglichst einfaches und schnelles Verfahren zur Auswertung herangezogen werden, das innerhalb kurzer Zeit Ergebnisse liefert bzw. nicht verwertbare Ergebnisse schnell aussortiert.

Bei Messgeräten, die sehr schnelle Messungen und Auswertungen mittels Operationsverstärkern durchführen sollen, bereitet die Quotientenbildung stets Schwierigkeiten. Es wird deshalb vorgeschlagen, die Vegetationsindexe mit Hilfe des natürlichen Logarithmus zu berechnen. Die Quotientenbildung des üblichen normalisierten Vegetationsindex (NDVI) wird in eine Differenz der natürlichen Logarithmen überführt. Dadurch ergeben sich nicht nur Vorteile bei der technischen Umsetzung der Schaltung sondern auch größere Zahlenunterschiede bei Blättern mit unterschiedlichen Chlorophyllgehalten. Damit können kleinere Unterschiede im Chlorophyllgehalt der Blätter wesentlich besser erkannt werden.

Der neuartige Index wird in Anlehnung an den NDVI im Rahmen dieser Anmeldung nur mit den Buchstaben lnNDVI abgekürzt. Beim lnNDVI wird die Differenz aus natürlichen Logarithmen der spektralen Reflexionsfaktoren bestimmt.

Alternativ kann man anstelle der spektralen Reflexionskoeffizienten $\rho$ auch die Signale S der Empfänger nutzen. Es wird entsprechend ein Verfahren zur Auswertung einer Messung zur Bestimmung einer optischen Eigenschaft einer Pflanze mit den Schritten des Erfassens eines Wertepaares, das ein Signal $S_{grün}$ eines ersten Empfängers und ein Signal $S_{rot}$ eines zweiten Empfängers aufweist, und des Bestimmens eines normalisierten logarithmischen Vegetationsindexes lnNDVI$_{Blatt}$ mittels der folgenden Gleichung vorgeschlagen:

$$\ln NDVI_{Blatt} = K \cdot \ln\left(S_{grün} - S_{rot}\right) - \ln\left(S_{rot}\right),$$

wobei K ein Kalibrierfaktor ist, und wobei das Wertepaar zumindest dann verworfen wird, wenn der Term $\ln(S_{grün} - S_{rot})$ nicht bestimmbar ist, und lnNDVI$_{Blatt}$ berechnet wird, wenn der Term $\ln(S_{grün} - S_{rot})$ bestimmbar ist. Entsprechend werden dann Kalibrierfaktoren K$_1$ bis K$_n$ benötigt, die eine gerätespezifische Kalibrierkurve angeben, die unter anderem von der Laserleistung, dem Empfänger, der Optik und der elektronischen Verstärkung abhängig ist. Zur Ermittlung der Kalibrierkurve K muss das Gerät eingemessen bzw. kalibriert werden.

Am folgenden Beispiel wird die verbesserte Auswertung deutlich. Beispielsweise ergeben sich bei einem Blatt mit einem geringen Chlorophyllgehalt (Chl) von 11 $\mu$g Chl/cm$^2$ folgende Werte: $\rho_{grün} = 0,24$ und $\rho_{rot} = 0,14$. Der neue lnNDVI berechnet sich dann zu -0,336472237. Ein Blatt mit einem höheren Chlorophyllgehalt von 40 $\mu$g Chl/cm$^2$ führt zu $\rho_{grün} = 0,11$ und $\rho_{rot} = 0,06$. Der neue lnNDVI berechnet sich zu -0,182321557. Die größere Empfindlichkeit des logarithmischen Indexes lnNDVI erkennt man an dem Quotienten (-0,3364/-0,1823) von 1,847. Mit der ursprünglichen Formel für den
$$NDVI = \frac{\rho_{grün} - \rho_{rot}}{\rho_{grün} + \rho_{rot}}$$
sich nur ein Quotient von 0,89 ergeben.

Des Weiteren ergibt sich durch die Auswertung eine einfache Erkenntnis darüber, ob auf einem Blatt gemessen wurde oder aber etwa von dem Boden reflektierte Strahlung empfangen wurde. Bei nicht-grünen Flächen ist das Signal des Empfängers für rote Strahlung größer als das des Empfängers für grüne Strahlung. Die Differenz $\rho_{grün} - \rho_{rot}$ ist dann negativ, und der natürliche Logarithmus kann nicht berechnet werden. Der natürliche Logarithmus einer negativen Zahl existiert nicht und führt somit zu einer Fehlermeldung. Dies kann zum Aussortieren der Bodenmessungen genutzt werden.

Auf diese Weise können eine Vielzahl von Messergebnissen schnell ausgewertet werden.

Des Weiteren kann wird ein Verfahren zur Auswertung einer Messung zur Bestimmung einer optischen Eigenschaft, insbesondere des Chlorophyllgehalts, des Befalls von Krankheiten, Pilzen, Raupen usw., einer Pflanze vorgesehen sein, das den Schritt des Erfassens eines Wertepaares, und des Bestimmens eines Parameters A$_Q$ mittels der Gleichung

$$A_Q = K_1 \cdot \frac{\rho_{rot}}{\rho_{grün}}$$

aufweist, wobei $\rho_{grün}$ der Reflexionsgrad für grünes Licht und $\rho_{rot}$ der Reflexionsgrad für rotes Licht sind. Der Faktor K$_1$ ist Bestandteil einer Kalibrierkurve zum Linearisieren und Anpassen der Skala eines Sensorsystems, das zum Erfassen des Wertepaares eingesetzt wurde. Der Faktor K$_1$ ist unter anderem abhängig von der Laserleistung, dem Empfänger, der Optik, der elektronischen Verstärkung und vom Messbereich. Zur Ermittlung der Kalibrierkurve K muss das Sensorsystem eingemessen bzw. kalibriert werden.

Bei einem Faktor $K_1 = 100$ liefert die Gleichung $A_Q = +30$ für grüne Pflanzen mit wenig Chlorophyll und bei Blättern mit viel Chlorophyll $A_Q = +75$. Ein steigender Chlorophyllgehalt in den Blättern führt zu einer Zunahme des $A_Q$-Wertes. Damit ist kein Umdenken des Bedienpersonals notwendig. Ein höherer Wert deutet immer auf einen höheren Chlorophyllgehalt hin. Werden mit dem Messgerät keine grünen Pflanzenteile erfasst, sondern infolge von Krankheiten verfärbte Blätter oder Bodenbestandteile, Schneereste, Blattschädlinge wird ein $A_Q$-Wert angezeigt, der über +100 liegt. Zum Beispiel liefern Schneereste einen $A_Q = +101$, graue Pilzgeflechten einen $A_Q = +110$, braune Flecken der Blätter einen $A_Q = +133$, Kalksteine einen $A_Q = +155$, tote Kiefernadeln einen $A_Q = +176$ und trockene Sande einen $A_Q = +189$.

Des Weiteren kann ein Verfahren zur Auswertung einer Messung zur Bestimmung einer optischen Eigenschaft, insbesondere des Chlorophyllgehalts, des Befalls von Krankheiten, Pilzen, Raupen usw., einer Pflanze vorgesehen sein, insbesondere bei sich stark unterscheidenden

Messwerten, das die Schritte des Erfassens eines Wertepaares, und des Bestimmens eines Parameters $A_{In}$ mittels der Gleichung

$$A_{In} = \frac{K_2}{\ln \rho_{grün} - \ln \rho_{rot}}$$

aufweist, wobei $\rho_{grün}$ der Reflexionsgrad für grünes Licht und $\rho_{rot}$ der Reflexionsgrad für rotes Licht ist. Unmittelbar an die Bestimmung des Reflexionsgrades wird der logarithmus naturalis (ln) von dem Reflexionsgrad gebildet. $K_2$ ist ein Faktor zum Linearisieren und Anpassen der Skala des Messgerätes. Bei einem Faktor $K_2 = 50$ liefert die Gleichung einen $A_{In} = +40$ für grüne Pflanzen mit wenig Chlorophyll und bei Blättern mit viel Chlorophyll auf einen $A_{In} = +180$. Ein steigender Chlorophyll-Gehalt in den Blättern führt zu einer Zunahme des $A_{In}$-Wertes, die alle im positiven Bereich liegen. Damit ist kein Umdenken des Bedienpersonals notwendig. Ein höherer Wert deutet immer auf einen höheren Chlorophyllgehalt hin. Werden mit dem Messgerät keine Pflanzen erfasst, sondern Bodenbestandteile oder Schneereste, Blattschädlinge oder infolge von Krankheiten verfärbte Blätter wird ein stark negativer $A_{In}$-Wert angezeigt, der bei < -50 liegt. Zum Beispiel liefern trockene Sande einen $A_{In} = -78$, tote Kiefernadeln einen $A_{In} = -88$, Kalksteine einen $A_{In} = -113$, braune Flecken der Blätter einen $A_{In} = -173$, graue Pilzgeflechten einen $A_{In} = -525$ und Schneereste einen $A_{In} = -3415$.

Durch die $A_{In}$-Werte ist eine sehr gute Unterscheidung zwischen den erfassten Messobjekten möglich. Bei am Boden liegenden Jungpflanzen kann der positive Messwert vom grünen Blatt sofort vom negativen Messwert des Bodens separiert werden. Der Messwert des Bodens geht dann nicht mehr in die Mittelwertbildung ein, wie es bei den bekannten Systemen erfolgt, die zeitgleich und untrennbar eine große Bodenfläche mit kleinem Pflanzenanteil und großen Bodenanteil erfassen. Die Klasse der gesunden grünen chlorophyllhaltigen Blätter liefert $A_{In}$-Werte von +40 bis +200. Die Klasse der Böden, Krankheiten und Schädlinge liefert negative $A_{In}$-Werte. Ein weiterer Vorteil ist die Unterscheidungsmöglichkeit zwischen Nutzpflanzen von Fremdpflanzen (Unkräuter). Der Anteil der Fremdpflanzen im Nutzpflanzenbestand kann berechnet werden, indem die Klasse der chlorophyllhaltigen Pflanzen nach den $A_{In}$-Werten unterteilt wird. Ein weiterer Vorteil ist die Möglichkeit der Bestimmung des prozentualen Anteils von Blattkrankheiten oder Schädlingen im Nutzpflanzenbestand. Wenn infolge des begrenzten, nicht bis auf den Boden reichenden Messzylinder kein Boden erfasst werden kann, sind die Blattkrankheiten und Schädlinge deutlich von den gesunden Blättern unterscheidbar, weil gesunde Nutzpflanzen stets positive $A_{In}$-Werte und Blattkrankheiten oder Schädlingen negative $A_{In}$-Werte liefern.

Die eingangs gestellte Aufgabe wird daher vollständig gelöst.

Bei dem erfindungsgemäßen Sensorsystem kann in einer Ausführungsform des Weiteren vorgesehen sein, dass ein zweiter Empfänger vorgesehen ist, wobei der zweite Empfänger derart entlang einer vierten Strahlachse ausgerichtet ist, dass ein entlang der vierten Strahlachse verlaufender zweiter Messzylinder sowie der erste Messzylinder und die Zielzylinder einander in der Messraum zumindest teilweise überlappen und die erste Strahlachse und die zweite Strahlachse jeweils einen Winkel mit der vierten Strahlachse einschließen.

Auf diese Weise ist es möglich, jeweils einen Empfänger für jeden Wellenlängenbereich bereitzustellen, der entsprechend für diesen Wellenlängenbereich sensibilisiert ist. Des Weiteren können beide Empfänger durchgängig betrieben werden. Bei lediglich einem Empfänger müsste dieser beispielsweise zeitversetzt die reflektierte Strahlung der ersten Lichtquelle und der zweiten Lichtquelle aufzeichnen. Mittels der durchgängigen Aufzeichnung jeweils eines Empfängers können verlässlichere Messergebnisse erzielt werden.

Insbesondere kann vorgesehen sein, dass die erste und die zweite Lichtquelle in einem ersten Gehäuse und der mindestens eine erste Empfänger in einem zweiten Gehäuse angeordnet sind. Sind beispielsweise zwei Empfänger vorgesehen, sind entsprechend der erste und der zweite Empfänger in einem zweiten Gehäuse angeordnet.

Um das Reflexionsverfahren erfindungsgemäß durchzuführen, sind Lichtquelle und Empfänger in getrennten Gehäusen bzw. in optisch voneinander getrennten Abschnitten desselben Gehäuses vorzusehen, worunter auch "getrennte Gehäuse" im Sinne der Erfindung verstanden werden. Das Verhältnis der Amplitude des Sendesignals zu dem Empfangssignal liegt etwa in einem Größenverhältnis von 1 Million : 1. Bei einer Anordnung von Lichtquellen und Empfangseinrichtungen in demselben Gehäuse bzw. ohne optische Trennung voneinander würde das Empfangssignal zwangsläufig von Reflexionen des Sendesignals bzw. der Lichtquelle innerhalb des Gehäuses überlagert werden.

Insbesondere kann vorgesehen sein, dass die erste Lichtquelle Licht in einem ersten Wellenlängenbereich und die zweite Lichtquelle Licht in einem zweiten Wellenlängenbereich ausstrahlt.

Wie bereits eingangs ausgeführt wurde, ist es auf diese Weise möglich, einen Referenzwert zu erfassen und so auf den absoluten Reflexionskoeffizienten rückzuschließen, unabhängig davon, ob der Reflexionsgrad durch eine Blattschrägstellung beeinflusst wird.

Des Weiteren kann vorgesehen sein, dass jeder Empfänger einen optischen Bandpassfilter aufweist, der durchlässig für Licht des ersten Wellenlängenbereichs und/oder des zweiten Wellenlängenbereichs ist.

Ein wesentlicher Störeinfluss des Reflexionsverfahrens ist die Sonneneinstrahlung, beispielsweise das von der Pflanze reflektierte Sonnenlicht, das ebenfalls von dem mindestens einen Empfänger erfasst wird.

Durch die Bandpassfilter kann so das Signal-Rausch-Verhältnis verbessert werden, indem nur Licht in dem entsprechenden Wellenlängenbereich hindurchgelassen wird.

Insbesondere kann dabei vorgesehen sein, dass der erste Wellenlängenbereich ein Wellenlängenbereich grünen Lichts und der zweite Wellenlängenbereich ein Wellenlängenbereich roten Lichts ist. Es können aber auch andere Wellenlängenbereiche, zum Beispiel im nahen Infrarotbereich, genutzt werden.

Bereits eingangs wurde dargelegt, dass grünes Licht besonders gut von chlorophyllhaltigen Pflanzen reflektiert wird und daher ein stark chlorophyllabhängiger Reflexionskoeffizient im grünen Wellenlängenbereich vorherrscht. Im Gegensatz dazu ist der Reflexionskoeffizient im roten Wellenlängenbereich nicht so stark chlorophyllabhängig und kann als Referenzwert dienen.

Im Rahmen der vorliegenden Erfindung werden die Wellenlängenbereiche in etwa folgendermaßen den Spektralfarben zugeordnet: Violett: 380 bis 420 nm, Blau: 420 bis 490 nm, Grün: 490 bis 575 nm, Gelb: 575 bis 585 nm, Orange: 585 bis 650 nm, Rot: 650 bis 780 nm und Infrarot über 780 nm.

Die günstigsten Wellenlängenbereiche zum Nachweis des Chlorophyllgehalts liegen bei 555 nm und bei ca. 650 bis 690 nm. Bei einer Ausführungsform der Erfindung kann vorgesehen sein, dass die Lichtquellen Laser mit einer mittleren Leistung von etwa 0,2 mW bis etwa 4,5 mW sind. Die Leistungen der Laser liegen somit in einem geringen Bereich der Augensicherheit für gewerblich eingesetzte Laser. Die entsprechenden Grenzwerte sind der Norm DIN EN 60825-1 zu entnehmen. Die Laserwellenlänge ist nicht beliebig wählbar, sie ist durch die physikalischen Eigenschaften der stimulierten Emission vorgegeben. Typische Laserwellenlängen liegen bei jeweils etwa 515 nm, 532 nm, 635 nm, 650 nm, 670 nm, 780 nm, 808 nm und 905 nm. Es kann beispielsweise ein grüner Laser mit etwa 532 nm Wellenlänge und ein roter Laser mit etwa 670 nm Wellenlänge verwendet werden.

Des Weiteren kann in Kombination mit den übrigen Ausführungsformen der Erfindung vorgesehen sein, dass das von der ersten Lichtquelle und von der zweiten Lichtquelle ausgestrahlte Licht mit einer konstanten Modulationsfrequenz moduliert ist und der mindestens eine erste Empfänger die Modulationsfrequenz bevorzugt detektiert bzw. auf diese abgestimmt ist. Insbesondere kann vorgesehen sein, dass das von der ersten Lichtquelle und von der zweiten Lichtquelle ausgestrahlte Licht rechteck- oder sinusförmig mit konstanter Frequenz gepulst moduliert ist und der mindestens eine erste Empfänger lediglich elektrische Signale innerhalb einer Frequenzbandbreite auswertet, in der die Pulsfrequenz der Lichtquelle liegt.

Es kann auch vorgesehen sein, dass die erste Lichtquelle und die zweite Lichtquelle jeweils Licht in einer konstanten Frequenz gepulst abstrahlen, wobei die Frequenzen verschieden voneinander sind, wobei der mindestens eine erste Empfänger Signale auswertet, die die Frequenz aufweisen. Es könne dabei zwei Empfänger vorgesehen sein, wobei ein erster Empfänger auf die Frequenz der ersten Lichtquelle und ein zweiter Empfänger auf die Frequenz der zweiten Lichtquelle abgestimmt ist bzw. diese auswertet. Ist nur ein Empfänger vorgesehen, ist dieser auf beide Frequenzen abgestimmt sein bzw. diese auswerten.

Die Lichtquellen bzw. Laser werden also mit einer elektronischen Baugruppe so angesteuert, dass sie Wechselstrahlung, das heißt gepulste Strahlung, mit einer bestimmten Taktfrequenz abgeben. Die Wechselstrahlung wird von der Lichtquelle auf das Blatt gestrahlt und von der Auftrefffläche des Blattes reflektiert. Die Lichtstrahlen ändern durch die Reflexion nicht ihre Taktfrequenz, sondern nur ihre Amplitude, die kleiner wird. Die von dem Blatt bzw. der Pflanze reflektierte Wechselstrahlung unterscheidet sich maßgeblich von einer Gleichlicht-Störstrahlung, zum Beispiel von der Strahlung der Sonne oder von Scheinwerferlampen. Die zu einem der Empfänger gelangende Wechselstrahlung der Lichtquelle erzeugt eine Wechselspannung. Dazu werden Empfänger mit nachfolgenden Wechselspannungsverstärkern eingesetzt, die nur Signale in einer schmalen Frequenzbandbreite auswerten, in der auch die Frequenz der gepulsten Licht- bzw. Laserstrahlung liegt. Die Gleichlicht-Störstrahlung der Sonne erzeugt im Empfänger eine Gleichspannung. In einer nachfolgenden Schaltung wird nur die Wechselspannung weiterverarbeitet und die Gleichspannung blockiert.

Darüber hinaus kann in einer Ausführungsform vorgesehen sein, dass die erste und die zweite Strahlachse nicht deckungsgleich sind. Des Weiteren kann in dem Fall, dass zwei Empfänger vorgesehen sind, vorgesehen sein, dass die dritte und die vierte Strahlachse nicht deckungsgleich sind.

Nur wenn ein Zielzylinder als auch der dazugehörige Messzylinder einander überlappen, liefert der Empfänger ein Messsignal mit hoher Amplitude. Es kann vorgesehen sein, dass ein Schwellwert bzw. ein Messwertbereich hinterlegt ist und der Chlorophyllgehalt eines Blatts bzw. einer Pflanze nur dann bestimmt wird, wenn die Empfänger Signale liefern, die über dem vorgegebenen Schwellwert bzw. innerhalb des Messwertbereichs liegen. Dies wird nur dann der Fall sein, wenn die Zielzylinder einander größtenteils überlappen. Dies ist in der sogenannten Messfläche der Fall. Da natürlich eine gewisse Tiefenerstreckung bzw. dreidimensionale Erstreckung der Messfläche vorliegt, könnte man diese auch als "Messraum" bezeichnen, der eine zylinderähnliche Form aufweist. Vorliegend wird im Folgenden daher der Begriff Messraum verwendet.

Bei der Benutzung von Handgeräten ist es günstig, den Messwert nicht nur auf einer Skala anzuzeigen, sondern auch akustisch zu signalisieren. Daher kann das erfindungsgemäße Sensorsystem einen, insbesondere akustischen, Signalgeber aufweisen. Bei einem der erfindungsgemäßen Verfahren vorgesehen sein, einem Benutzer ein Auswertungsergebnis mittels eines Signalgebers, insbesondere akustisch, zu übermitteln. Dadurch wird der Bediener vom gleichzeitigen Beobachten der Messstelle auf dem Blatt und der Skala befreit. Der Tonhöhebereich für chlorophyllhaltige Blätter liegt einem mittleren Tonbereich von 200 Hz bis 400 Hz, wobei die Tonhöhe steigt, wenn der Chlorophyllgehalt steigt. Wird Boden erfasst, erfolgt ein tiefer Ton von 75 Hz bis 150 Hz. Bei Schädlingsbefall oder Blattkrankheiten wird ein höherer Ton von 500 Hz bis 600 Hz abgestrahlt.

In einer Weiterbildung der Verfahren zur Aufwertung eines Messung zur Bestimmung einer optischen Eigenschaft einer Pflanze kann des Weiteren vorgesehen sein, dass das Wertepaar auch dann verworfen wird, wenn ein eines oder beide der Signale bzw. einer oder beide der Reflexionskoeffizienten einen vorbestimmten Schwellbereich verlassen, insbesondere oberhalb eines oder unterhalb eines vorbestimmten Schwellwerts liegen.

Das vorgestellte Sensorsystem und die vorgestellten Verfahren unterscheiden sich somit wesentlich von den bisher vorgestellten Messverfahren, da von einem großflächigen Messvorgang auf eine Vielzahl kleinflächiger bzw. punktförmiger Messvorgänge umgestellt wird und damit insbesondere der Vorteil erlangt wird, innerhalb einer Blattfläche eine optische Eigenschaft bestimmen zu können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     eine schematische Ansicht einer Ausführungsform eines Sensor-systems,

Fig. 2     eine schematische Draufsicht entlang einer Linie II-II in Fig. 1,

Fig. 3     das Sensorsystem in Fig. 1 mit Darstellung gültiger und ungültiger Messbereiche,

Fig. 4     eine schematische Draufsicht entlang einer Linie IV-IV in Fig. 3,

Fig. 5     eine schematische Draufsicht entlang einer Linie V-V in Fig. 3,

Fig. 6     eine schematische Draufsicht entlang einer Linie VI-VI in Fig. 3,

Fig. 7     ein schematisches Ablaufdiagramm eines Verfahrens zur Auswertung einer Messung zur Bestimmung einer optischen Eigenschaft einer Pflanze.

Fig. 8     ein schematisches Ablaufdiagramm eines weiteren Verfahrens zur Auswertung einer Messung zur Bestimmung einer optischen Eigenschaft einer Pflanze, und

Fig. 9     ein schematisches Ablaufdiagramm noch eines weiteren Verfahrens zur Auswertung einer Messung zur Bestimmung einer optischen Eigenschaft einer Pflanze.

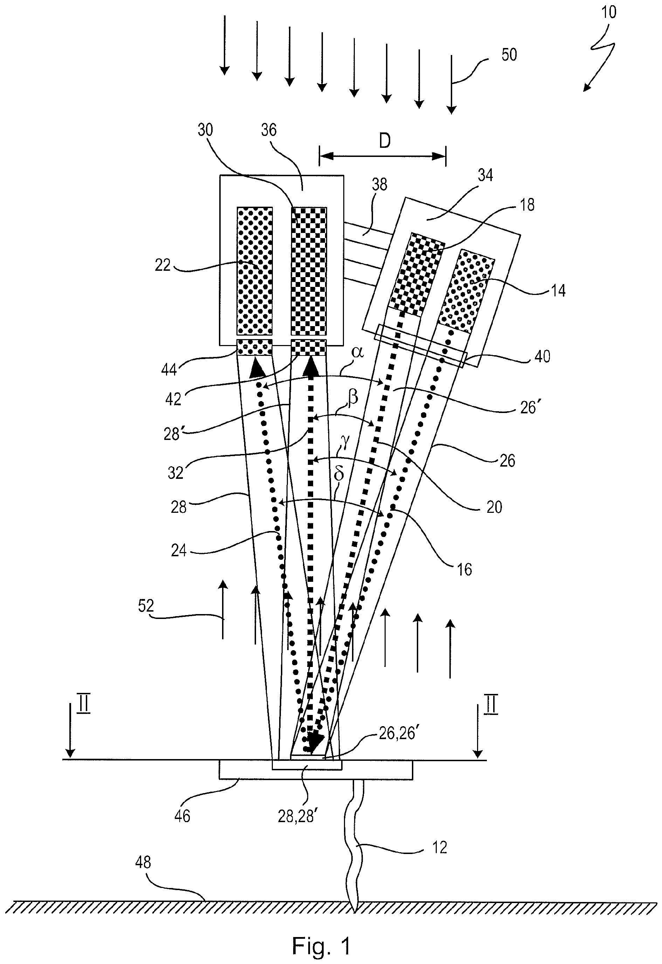

Fig. 1 zeigt ein Sensorsystem 10 gemäß einer Ausführungsform der Erfindung. Das Sensorsystem 10 dient zur Bestimmung des Chlorophyllgehalts einer Pflanze 12 mittels einer Reflexionsmessung.

Das Sensorsystem 10 weist eine erste Lichtquelle 14, die Licht entlang einer ersten Strahlachse 16 ausstrahlt, und eine zweite Lichtquelle 18, die Licht entlang einer zweiten Strahlachse 20 ausstrahlt, auf. Die Lichtquellen 14, 18 sind als Laser ausgestaltet, wobei beispielsweise die erste Lichtquelle 14 Licht mit einer Wellenlänge von etwa 532 nm, also im grünen Wellenlängenbereich, und die zweite Lichtquelle 18 Licht in einer Wellenlänge von etwa 670 nm, also in einem roten Wellenlängenbereich, ausstrahlt.

Des Weiteren weist das Sensorsystem 10 einen ersten Empfänger 22 auf, der entlang einer dritten Strahlachse 24 ausgerichtet ist. Entlang der ersten Strahlachse 16 und der zweiten Strahlachse 20 erstreckt sich jeweils ein Zielzylinder 26, 26', in dem das Strahlbündel des entsprechenden Lasers verläuft. Die Zielzylinder 26, 26' weisen jeweils einen Durchmesser von beispielsweise etwa 2 mm auf. Unter "im Wesentlichen zylinderförmig" wird verstanden, dass der Zielzylinder 26 keinerlei Aufweitung oder nur eine sehr geringe Aufweitung aufweist. Eine sehr geringe Aufweitung kann beispielsweise im Bereich von 2 mrad liegen. Gleiches gilt auch für den Zielzylinder 26'.

Entlang der dritten Strahlachse 24 des ersten Empfängers 22 erstreckt sich ein Messzylinder 28, das heißt derjenige Raumbereich, auf den der Empfänger ausgerichtet ist.

Der erste Empfänger 22 ist dazu vorgesehen, Licht in einem grünen Wellenlängenbereich, das heißt das Licht der ersten Lichtquelle 14, zu empfangen.

Des Weiteren ist ein zweiter Empfänger 30 vorgesehen, der entlang einer vierten Strahlachse 32 ausgerichtet ist. Entlang der vierten Strahlachse 32 erstreckt sich ein weiterer Messzylinder 28' des zweiten Empfängers 30.

Die erste Lichtquelle 14 und die zweite Lichtquelle 18 sind in einem ersten Gehäuse 34 vorgesehen. Der erste Empfänger 22 und der zweite Empfänger 30 sind in einem zweiten Gehäuse 36 vorgesehen.

Das erste Gehäuse 34 und das zweite Gehäuse 36 sind mit einer Befestigungsmechanik 38 verbunden.

Mittels der Befestigungsmechanik 38 lassen sich das erste Gehäuse 34 und das zweite Gehäuse 36 sowohl in ihrem Abstand D relativ zueinander als auch in ihren Neigungswinkeln einstellen. Mit Hilfe der Befestigungsmechanik 38 lassen sich somit auch ein Winkel $\alpha$, zwischen der zweiten 20 und der dritten 24 Strahlachse, ein Winkel $\beta$ zwischen der zweiten 20 und der vierten 32 Strahlachse, ein Winkel $\gamma$ zwischen der ersten 16 und der vierten 32 Strahlachse und ein Winkel $\delta$ zwischen der ersten 16 und der dritten 24 Strahlachse einstellen. Auf diese Weise wird es möglich, wie nachfolgend noch eingehender beschrieben werden wird, den Messraum des Sensorsystems 10 einzustellen. Außerhalb der Erfindung kann die Befestigungsmechanik 38 derart ausgestaltet sein, dass der Abstand D fest ist und lediglich die Winkel $\alpha$, $\beta$, $\gamma$ und $\delta$ verstellt werden können. Die Empfänger 22, 30 und die Lichtquellen 14, 18 können auch jeweils separat in einem eigenen Gehäuse untergebracht sein, so dass die Winkel $\alpha$, $\beta$, $\gamma$ und $\delta$ sind getrennt und unabhängig voneinander einstellbar sind.

Des Weiteren ist ein zweiter optischer Bandpassfilter 42 vor dem zweiten Empfänger 30 vorgesehen. Dieser Bandpassfilter 42 ist derart eingestellt, dass er hauptsächlich für Lichtstrahlen desjenigen Wellenlängenbereichs durchlässig ist, die von der zweiten Lichtquelle 18 ausgestrahlt werden, im vorliegenden Fall also rote Strahlung in einem Wellenlängenbereich von etwa 670 nm. Des Weiteren ist ein erster optischer Bandpassfilter 44 vor dem ersten Empfänger 22 vorgesehen. Dieser ist lediglich durchlässig für grüne Strahlung von etwa 532 nm, so dass er hauptsächlich die Strahlung der ersten Lichtquelle 14 durchlässt.

Die von der ersten Lichtquelle 14 und von der zweiten Lichtquelle 18 ausgestrahlte Strahlung wird von einem Blatt 46 der Pflanze 12 reflektiert. Das Blatt 46 befindet sich oberhalb eines Bodens 48. Die von dem Blatt 46 reflektierte Strahlung tritt dann in den ersten Empfänger 22 und den zweiten Empfänger 30 ein.

Naturgemäß liegt des Weiteren eine Sonnenstrahlung 50 vor, die ebenfalls von dem Blatt 46 reflektiert wird, so dass auch reflektierte Sonnenstrahlung 52 in den ersten Empfänger 22 und den zweiten Empfänger 30 eintreten kann.

Unter anderem durch die Bandpassfilter 42 und 44 können jedoch bereits wesentliche Leistungsanteile dieser Störstrahlung bzw. reflektierten Sonnenstrahlung 52 unterdrückt werden. Durch den roten Bandpassfilter 42 tritt nur noch das rote Licht der reflektierten Sonnenstrahlung 52 und der roten Lichtquelle 18. Durch den grünen Bandpassfilter 44 tritt nur noch das grüne Licht der reflektierten Sonnenstrahlung 52 und der grünen Lichtquelle 14.

Eine weitere Beseitigung diverser Störquellen ist zu erreichen, indem die Strahlung der ersten Lichtquelle 14 und der zweiten Lichtquelle 18 beispielsweise gepulst oder als sinusförmige Wechselstrahlung abgegeben wird. Beispielsweise kann vorgesehen sein, dass die erste Lichtquelle 14 und die zweite Lichtquelle 18 mit einer bestimmten Frequenz gepulste Laserstrahlung abstrahlen. Diese dann zu den Empfängern 22, 30 gelangende Wechselstrahlung erzeugt in den Empfängern 22, 30, bei denen es sich beispielsweise um Photodioden handeln kann, eine Wechselspannung. Die Gleichlicht-Störstrahlung 52 erzeugt in den Empfängern 22, 30 eine Gleichspannung. Mittels einer geeigneten nachfolgenden Schaltung wird nur die Wechselspannung weiterverarbeitet und die Gleichspannung blockiert.

Mit Hilfe dieser Maßnahmen kann mittels des erfindungsgemäßen Sensorsystems die durch Sonneneinstrahlung und andere Gleichlichtstrahlung bewirkte elektrischen Störspannungen in den Empfängern 22, 30 im Wesentlichen unterdrückt werden.

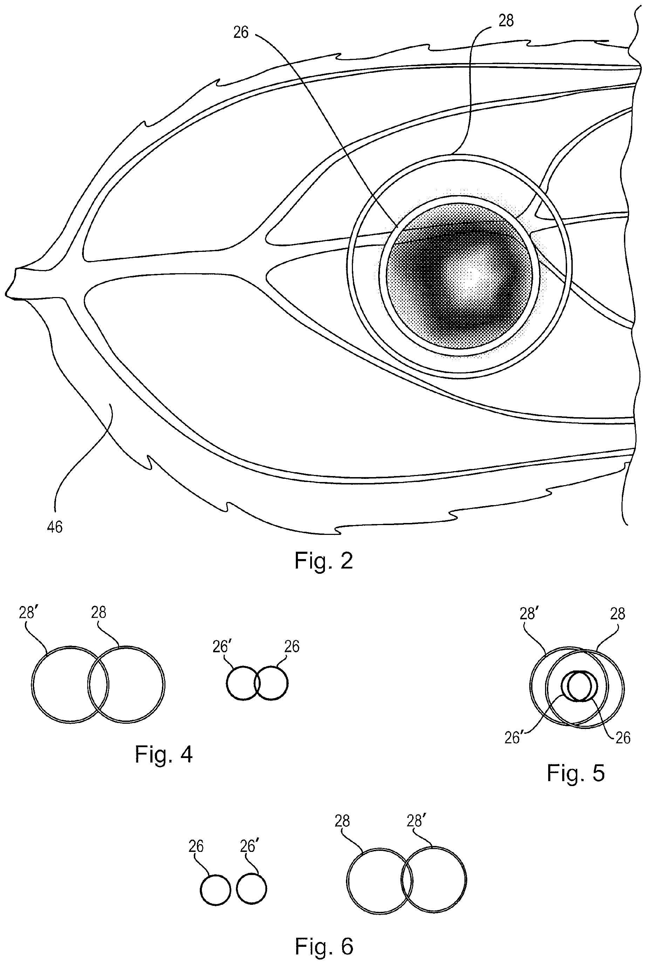

Fig. 2 zeigt eine schematische Draufsicht entlang einer Linie II-II in Fig. 1.

Gezeigt ist die Draufsicht auf das Blatt 46. Darin sind ein Umriss des Zielzylinders 26 und ein Umriss des Messzylinders 28 dargestellt. Wie zu erkennen ist, liegen innerhalb des Zielzylinders 26 die Laserstrahlen der ersten Lichtquelle 14 und der zweiten Lichtquelle 18. Die Zielzylinder 26, 26' überlappen einander in der dargestellten Draufsicht vollständig, das heißt sie sind deckungsgleich. Grundsätzlich kann vorgesehen sein, dass innerhalb des ersten Gehäuses 34 auch die erste Lichtquelle 14 und die zweite Lichtquelle 18 relativ zueinander geneigt werden können, um die erste Strahlachse 16 und die zweite Strahlachse 20 relativ zueinander zu verstellen. Auf diese Weise kann die Ebene, in der die Zielzylinder 26, 26' deckungsgleich sind, eingestellt werden. Gleiches gilt für den ersten Empfänger 22 und den zweiten Empfänger 30, die ebenfalls verstellbar relativ zueinander innerhalb des zweiten Gehäuses 36 angeordnet sein können.

In der dargestellten Ansicht in Fig. 2 sind die Messzylinder 28, 28' in der Schnittansicht ebenfalls deckungsgleich. Die dargestellte Ansicht stellt somit einen Optimalzustand dar, der nur in einer bestimmten Höhe erreicht wird, wie im Folgenden noch erläutert werden wird.

Liegen die Zielzylinder 26, 26' vollständig in den Messzylindern 28, 28', ist die Leistung des reflektierten Lichts hoch genug, dass ein gewisser Schwellwert, der vordefiniert ist, deutlich überschritten wird. In diesem Fall findet eine Auswertung der Messergebnisse statt. Überlappen sich die Zielzylinder 26, 26' und die Messzylinder 28, 28' nur zu geringem Teil oder gar nicht, wird dieser Schwellwert unterschritten, und es findet keine Auswertung der Messergebnisse statt. Dies ist, wie im Folgenden erläutert wird, insbesondere dann der Fall, wenn Licht von zu hoch oder zu tief liegenden Objekten reflektiert wird.

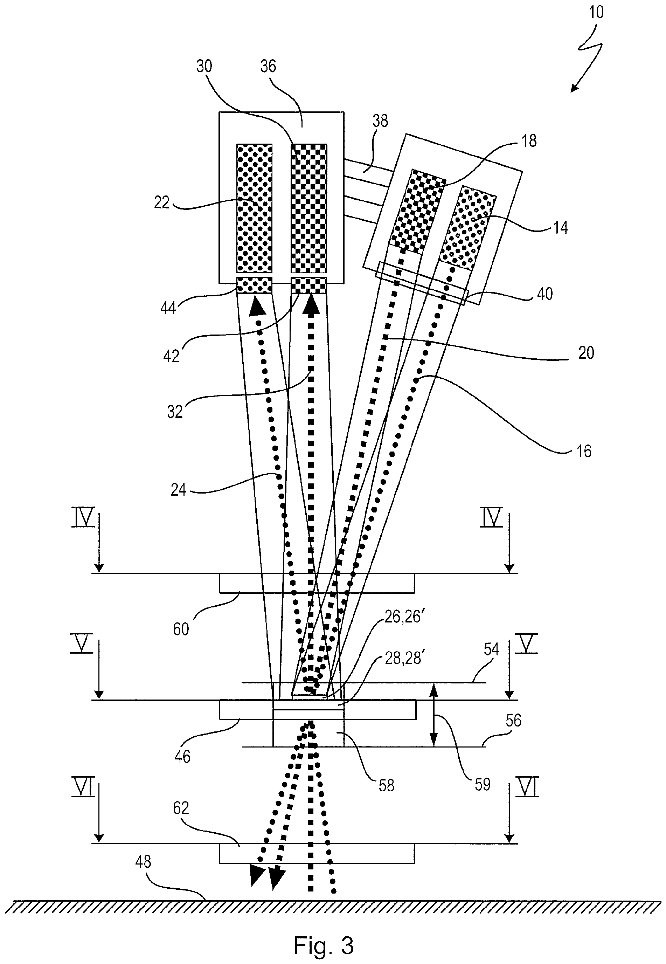

Fig. 3 zeigt die Ausführungsform des Sensorsystems in Fig. 1. Dargestellt ist zudem eine obere nutzbare Messebene 54 und eine untere nutzbare Messebene 56. Liegt das Blatt 46 zwischen den nutzbaren Messebenen 54, 56, überlappen die Zielzylinder 26, 26' und Messzylinder 28, 28' einander ausreichend, so dass der vorliegend definierte Schwellwert überschritten und eine Auswertung der Messergebnisse vorgenommen wird. Daraus ergibt sich der Messraum 58 mit der nutzbaren Höhenschicht 59. Der Messraum 58 weist somit eine gewisse Erstreckung in Höhenrichtung auf.

Es findet also nur eine Auswertung des reflektierten Lichts von Objekten statt, die innerhalb des Messraums 58 liegen. Auf diese Weise lässt sich beispielsweise bei einem Sensorsystem, das auf einem Landfahrzeug oder einer Landmaschine angebracht ist, unter Kenntnis des zu vermessenden Pflanzenbewuchses die Höhenschicht 59 einstellen, in der die zu vermessenden Blätter 46 liegen. Während der Fahrt bzw. während des Düngevorgangs kann dann der Chlorophyllgehalt der Blätter in diesem Messraum 58 bestimmt und auf den Stickstoffgehalt der Pflanzen 12 geschlossen werden. So wird es möglich, während der Fahrt in Echtzeit die aufzubringende Düngemittelmenge zu bestimmen.

Gerät ein Objekt in einer zu hoch liegenden Messraum 60 in den Bereich des Sensors 10, ergibt sich die in Fig. 4 dargestellte Anordnung.

Die Fig. 4 zeigt die Draufsicht auf eine Ebene IV-IV in Fig. 3, die den Fall eines zu hoch liegenden Blattes 46 angibt. Die Zielzylinder 26, 26' und die Messzylinder 28, 28' fallen auseinander. Von der ersten Lichtquelle 14 und von der zweiten Lichtquelle 18 ausgestrahlte Strahlung kann nicht von den Empfängern 22 und 30 erfasst werden. Die in dem ersten Empfänger 22 und dem zweiten Empfänger 30 empfangene Strahlungsleistung der Wechselstrahlung ist somit äußerst gering oder sogar gleich Null. In jedem Fall liegt die Strahlungsleistung unter dem vordefinierten Schwellwert. Eine Auswertung findet somit nicht statt.

Die Fig. 5 zeigt eine Draufsicht auf eine Ebene V-V in Fig. 3 mit einem Blatt 46 in der Messhöhe 59 und innerhalb des Messraums 58. Die Messzylinder 28, 28' überdecken vollständig die Zielzylinder 26, 26'.

Die Fig. 6 zeigt eine Draufsicht auf eine Ebene VI-VI in Fig. 3 mit einem Blatt 46 in einer zu tiefen Höhenschicht 62. Auch hier findet mangels einer Überdeckung der Zielzylinder 26, 26' und der Messzylinder 28, 28' keine Auswertung eines Messergebnisses statt.

Auf diese Weise ist es möglich, bei stationär, beispielsweise auf Landfahrzeugen angebrachten Sensorsystemen Messwerte aus unerwünschten Höhenschichten zu eliminieren.

Wird das Sensorsystem 10 als tragbares Handgerät verwendet, bei dem der Abstand zu den zu vermessenden Pflanzen ständig variiert, sollten die Zielzylinder 26, 26' und die Messzylinder 28, 28' derart eingestellt sein, dass die Winkelbeispielsweise durch eine geringere Länge der Befestigung 38 der Abstand zwischen den beiden Gehäusen 34 und 36 verringert und somit die Winkel $\alpha, \beta, \gamma, \delta$ verkleinert werden. Bei einem Handgerät ist eine optimale Messebene sehr gut durch das menschliche Auge erkennbar, weil der grüne Zielzylinder 26 und der rote Zielzylinder 26' sich sehr gut sichtbar überdecken, da sie aufgrund der Farbmischung von Grün und Rot einen hellen gelben Fleck bilden. Solange die beiden Zielzylinder 26 und 26' sich also nicht zumindest teilweise in Form eines hellen gelben Flecks überdecken, können bei dem Handgerät dann keine Messwerte aufgenommen werden.

Damit der Nutzer des Handgerätes sich nicht gleichzeitig auf die richtige Messentfernung und das Ablesen der Messwerte konzentrieren muss, kann beispielsweise vorgesehen sein, dass bei einer Messung des Chlorophyllgehalts bei dem Erreichen eines Messwertes, der der Mindestkonzentration an Chlorophyll entspricht, ein kurzer Ton mittlerer Tonhöhe ertönt. Mit steigendem Chlorophyllgehalt nimmt die Tonhöhe zu, bei abnehmendem Chlorophyllgehalt nimmt die Tonhöhe ab. Beim Erfassen von einer braunen Bodenflächen oder schwarzem Pilzbefall der Blätter 46 ertönt ein tiefer Ton. Werden viele Messwerte bei gleichem Chlorophyllgehalt innerhalb kurzer Zeit ausgegeben, erklingt eine schnelle Tonfolge gleicher Tonhöhe. Die Tonfolge wird langsamer, wenn wenige Messwerte ausgegeben werden. Wird kein sinnvoller Messwert ausgegeben, erfolgt ein tiefer Dauerton, um die Messbereitschaft des Gerätes akustisch anzuzeigen. Wird das Sensorsystem 10 mit einer akustischen Messwertausgabe bzw. einem akustischen Signalgeber stationär auf einem Landfahrzeug eingesetzt, kann der Fahrer sich besser auf den Fahrweg konzentrieren und muss nicht gleichzeitig die Messwerte von einem Display ablesen.

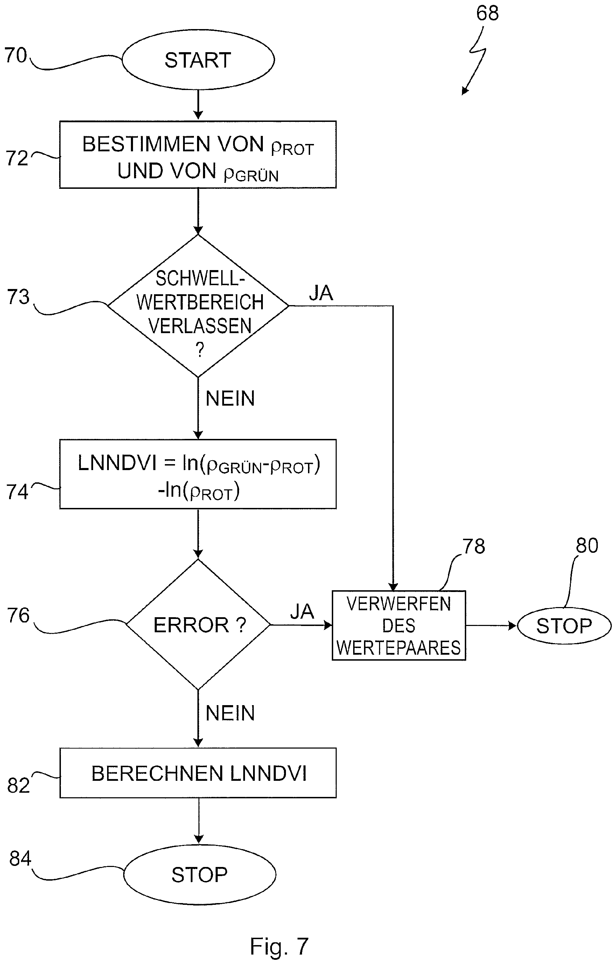

Fig. 7 zeigt ein schematisches Ablaufdiagramm eines Verfahrens 68 zur Auswertung von Messergebnissen bei der Bestimmung einer optischen Eigenschaft einer Pflanze, bspw. der Messung des Chlorophyllgehalts einer Pflanze 12, der Bestimmung von Krankheiten oder dem Befall des Blattes 46 mit Schädlingen.

Das Verfahren 68 beginnt mit einem Startschritt 70. In einem Schritt 72 werden zunächst ein Reflexionskoeffizient $\rho_{rot}$ und ein Reflexionskoeffizient $\rho_{grün}$ in dem ersten Empfänger 22 und in dem zweiten Empfänger 30 bestimmt. Die Reflexionskoeffizienten $\rho_{rot}$ und $\rho_{grün}$ stehen lediglich beispielhaft für Reflexionskoeffizienten, die bei verschiedenen Wellenlängen erzielt wurden, wobei eine der Wellenlängen einen stark chlorophyllabhängigen Reflexionskoeffizienten aufweist und die andere Wellenlänge einen stark chlorophyllunabhängigen Reflexionskoeffizienten aufweist. Diese müssen nicht zwingend tatsächlich ein roter und ein grüner Wellenlängenbereich sein, dies ist jedoch bevorzugt.

Optional kann dann in einem Schritt 73 eine Überprüfung stattfinden, ob die bestimmten Reflexionskoeffizienten $\rho_{rot}$ und $\rho_{grün}$ innerhalb eines vorbestimmten Schwellwertbereichs liegen. Stark glänzende schräg stehende Blätter 46 reflektieren unnatürlich viel Licht der Lichtquellen 14 und 18 zu den Empfängern 22 und 30, so dass ein vorbestimmter oberer Grenz- bzw. Schwellwert bei der Bestimmung der Reflexionskoeffizienten überschritten wird. Auf der anderen Seite reflektieren stark schräg stehende matte behaarte Blätter 46 wenig Licht, so dass ein vorbestimmter unterer Schwellwert bei der Bestimmung der Reflexionskoeffizienten unterschritten wird. Auch bei einer nur teilweisen Überdeckung der Messzylinder 28, 28' und Zielzylinder 26, 26' kann ein unterer Schwellwert unterschritten werden. Entsprechend ist dann vorgesehen, dass bei Überschreitung des oberen Schwellwerts bzw. bei Unterschreitung des unteren Schwellwerts das Wertepaar in einem Schritt 78 verworfen und das Verfahren bei Schritt 70 neu beginnt. Sonst setzt sich das Verfahren mit einem Schritt 74 fort.

Anschließend wird in dem Schritt 74 der lnNDVI, das heißt der normalisierte logarithmische Vegetationsindex, bestimmt.

Stammt die reflektierte Lichtstrahlung von einem Blatt 46, ist der Reflexionskoeffizient $\rho_{grün}$ größer als der Reflexionskoeffizient $\rho_{rot}$. Folglich wird der Term ln ($\rho_{grün}$ - $\rho_{rot}$) bestimmbar, da die Differenz größer als Null ist. Ist der Reflexionskoeffizient $\rho_{grün}$ kleiner als der Reflexionskoeffizient $\rho_{rot}$, weil die reflektierte Lichtstrahlung vom Boden 48 stammt, ist die Differenz negativ, und der Term ln ($\rho_{grün}$ - $\rho_{rot}$) ist nicht bestimmbar.

Als Ergebnis wird dann ein Fehler bestimmt. Folglich wird in einem Schritt 76 abgefragt, ob ein Fehler vorliegt oder nicht. Liegt ein Fehler vor, wird in einem Schritt 78 das gemessene Wertepaar verworfen, und die Auswertung des Wertepaares endet in einem Schritt 80. Das Verfahren beginnt dann erneut den Schritt 70 mit dem nächsten Wertepaar.

Liegt kein Fehler vor, wird in einem Schritt 82 der lnNDVI berechnet und zur weiteren Auswertung, das heißt zur Bestimmung des Chlorophyll- bzw. Stickstoffgehalts der Pflanze 12, weitergegeben.

Das Verfahren 68 endet in einem Schritt 84 und beginnt gegebenenfalls erneut in Schritt 70 mit dem nächsten Wertepaar.

Das vorgeschlagene Verfahren 68 stellt aufgrund der Bestimmung des lnNDVI somit eine einfache Methode bereit, Reflexionen von dem Boden 48 zu verwerfen. Darüber hinaus sind keine Divisionen vorzunehmen, so dass die Berechnung mittels einfacher Operationsverstärker schnell vorgenommen werden kann. Auf diese Weise wird es möglich, die mehreren Hundert pro Sekunde erfassten Wertepaare in Echtzeit auszuwerten und den Stickstoffgehalt der zu vermessenden Pflanzen 12 in Echtzeit zu berechnen.

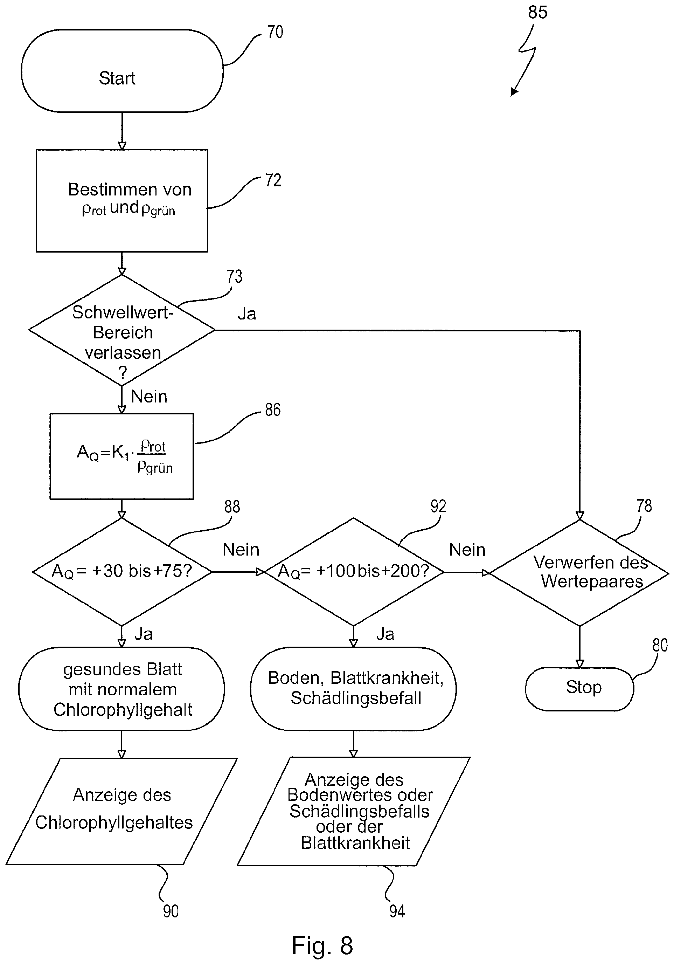

Fig. 8 zeigt ein schematisches Ablaufdiagramm eines weiteren Verfahrens 85 zur Auswertung von Messergebnissen bei der Bestimmung einer optischen Eigenschaft einer Pflanze 12, bspw. der Messung des Chlorophyllgehalts einer Pflanze 12, der Bestimmung von Krankheiten oder dem Befall des Blattes 46 mit Schädlingen. Gleiche Bezugszeichen kennzeichnen Verfahrensschritte, die denen des Verfahrens 68 entsprechen und werden im Folgenden nicht erneut beschrieben. Es wird lediglich auf die Unterschiede eingegangen.

In einem Schritt 86 wird ein Parameter $A_Q$ mit der Konstanten $K_1$= 100 bestimmt. Für grüne Pflanzen mit geringem Chlorophyllgehalt ergeben sich Werte um +30, die bei Blättern mit hohem Chlorophyllgehalt auf Werte bis zu +75 ansteigen. Eine entsprechende Abfrage findet in einem Schritt 88 statt und wird gegebenenfalls in einem Schritt 90 ausgegeben. Dagegen liefern Steine, Sande und Erde ebenfalls positive $A_Q$-Werte. Sie liegen aber im Bereich von +100 bis +200. Demzufolge kämen Werte von >100 nicht von grünen Pflanzen, sondern von braunen Blattstellen, Pilzen, Boden usw.. Es besteht ein Sicherheitsabstand der Zahlen zwischen <75 (Blatt mit viel Chlorophyll) und >101 (nasser Schnee, Steine, Erde usw.) Eine entsprechende Abfrage findet in einem Schritt 92 statt und wird gegebenenfalls in einem Schritt 94 ausgegeben. Die Ausgabe in den Schritten 90 und 94 kann auf einer Anzeige, kumulativ oder alternativ aber auch akustisch erfolgen.

Zum Nachweis der Menge von Fremdpflanzen (Unkräuter) in einem Nutzbestand kann der $A_Q$-Wert im Bereich von +30 bis +75 herangezogen werden. Die Fremdpflanzen sind in der Minderheit und weisen in der Regel Abweichungen vom positiven $A_Q$-Wertebereich der gesunden grünen Nutzpflanzen auf.

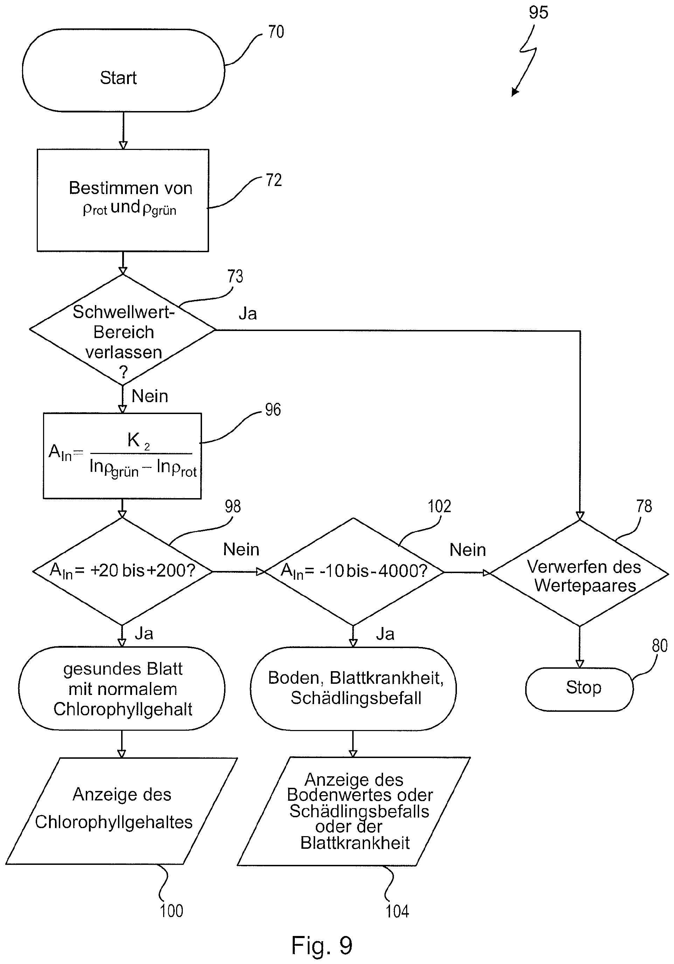

Fig. 9 zeigt ein schematisches Ablaufdiagramm eines weiteren Verfahrens 95 zur Auswertung von Messergebnissen bei der Bestimmung einer optischen Eigenschaft einer Pflanze 12, bspw. der Messung des Chlorophyllgehalts einer Pflanze 12, der Bestimmung von Krankheiten oder dem Befall des Blattes 46 mit Schädlingen. Gleiche Bezugszeichen kennzeichnen Verfahrensschritte, die denen der Verfahrens 68 und 85 entsprechen und werden im Folgenden nicht erneut beschrieben. Es wird lediglich auf die Unterschiede eingegangen.

In einem Schritt 96 wird ein Parameter $A_{ln}$ mit der Konstanten $K_2$ = 50 bestimmt. Für grüne Pflanzen mit einem geringen Chlorophyllgehalt ergeben positive Werte um +40, die bei Blättern mit einem hohen Chlorophyllgehalt auf Werte bis zu +180 ansteigen. Eine entsprechende Abfrage findet in einem Schritt 98 statt und wird gegebenenfalls in einem Schritt 100 ausgegeben. Natürliche Stoffe wie Steine, Erde und Sande führen zu negativen Werten von -50 bis -500 und sind damit sehr gut von grünen Blättern zu unterscheiden. Nasser Schnee liefert $A_{ln}$-Werte von etwa -3415. Eine entsprechende Abfrage findet in einem Schritt 102 statt und wird gegebenenfalls in einem Schritt 104 ausgegeben. Die Ausgabe in den Schritten 100 und 104 kann auf einer Anzeige, kumulativ oder alternativ aber auch akustisch erfolgen.

Zum Nachweis der Menge von Fremdpflanzen (Unkräuter) in einem Nutzbestand kann der $A_{ln}$-Wert im Bereich von +30 bis +170 herangezogen werden. Die Fremdpflanzen sind in der Minderheit und weisen in der Regel Abweichungen vom positiven $A_{ln}$-Wertebereich der gesunden grünen Nutzpflanzen aus.

**Patentansprüche**

1. Sensorsystem (10) zur Bestimmung einer optischen Eigenschaft einer Pflanze (12) mittels einer Reflexionsmessung, mit einer ersten Lichtquelle (14), die Licht entlang einer ersten Strahlachse (16) ausstrahlt, und einer zweiten Lichtquelle (18), die Licht entlang einer zweiten Strahlachse (20) ausstrahlt, und mindestens einem ersten Empfänger (22), der entlang einer dritten Strahlachse (24) ausgerichtet ist, um von der Pflanze (12) reflektiertes Licht zu erfassen, wobei die erste Lichtquelle (14), die zweite Lichtquelle (18) und der mindestens eine erste Empfänger (22) derart relativ zueinander angeordnet sind, dass ein jeweils entlang der ersten Strahlachse (16) und der zweiten Strahlachse (20) verlaufender Zielzylinder (26, 26') und ein entlang der dritten Strahlachse (24) verlaufender erster Messzylinder (28) einander in einem Messraum (58) zumindest teilweise überlappen und die erste Strahlachse (16) und die zweite Strahlachse (20) jeweils einen Winkel ($\alpha$, $\delta$) mit der dritten Strahlachse (24) einschließen, **dadurch gekennzeichnet, dass** eine Befestigung (38) der ersten (14) und der zweiten (18) Lichtquelle und des mindestens einen ersten Empfängers (22) derart vorgesehen ist, dass die Winkel ($\alpha$, $\beta$, $\gamma$, $\delta$) zwischen den Strahlachsen (16, 20) der Lichtquellen (14, 18) und der Strahlachse (24, 32) des mindestens einen Empfängers (22, 30) und ein Abstand zwischen den Lichtquellen (14, 18) und dem mindestens einen Empfänger (22, 30) eingestellt werden können, um den Messraum (58) einzustellen, und dass der Zielzylinder (26) der ersten Lichtquelle (14) und der Zielzylinder (26') der zweiten Lichtquelle (18) in dem Messraum (58) jeweils einen Durchmesser von 1 mm bis 6 mm aufweisen, wobei der Messzylinder (28, 28') des mindestens einen Empfängers (22, 30) in dem Messraum (58) einen Durchmesser von 8 mm aufweist.

2. Sensorsystem nach Anspruch 1, **dadurch gekennzeichnet, dass** ein zweiter Empfänger (30) vorgesehen ist, wobei der zweite Empfänger (30) derart entlang einer vierten Strahlachse (32) ausgerichtet ist, dass ein entlang der vierten Strahlachse (32) verlaufender zweiter Messzylinder (28') und der erste Messzylinder (28) und die Zielzylinder (26, 26') einander in dem Messraum (58) zumindest teilweise überlappen und die erste Strahlachse (16) und die zweite Strahlachse (20) jeweils einen Winkel ($\beta$, $\gamma$) der vierten Strahlachse (32) einschließen.

3. Sensorsystem nach Anspruch 1 oder 2, **dadurch gekennzeichnet, dass** die erste (14) und die zweite (18) Lichtquelle in einem ersten Gehäuse (34) und der mindestens eine erste Empfänger (22) in einem zweiten Gehäuse (36) angeordnet ist.

4. Sensorsystem nach einem der Ansprüche 1 bis 3, **dadurch gekennzeichnet, dass** die erste Lichtquelle (14) Licht in einem ersten Wellenlängenbereich und die zweite Lichtquelle (18) Licht in einem zweiten Wellenlängenbereich ausstrahlt.

5. Sensorsystem nach Anspruch 4, **dadurch gekennzeichnet, dass** jeder Empfänger (22, 30) einen optischen Bandpassfilter (42, 44) aufweist, der durchlässig für Licht des ersten Wellenlängenbereichs und/oder des zweiten Wellenlängenbereichs ist.

6. Sensorsystem nach Anspruch 4 oder 5, **dadurch gekennzeichnet, dass** der erste Wellenlängenbereich ein Wellenlängenbereich grünen Lichts und der zweite Wellenlängenbereich ein Wellenlängenbereich roten Lichts ist.

7. Sensorsystem nach einem der Ansprüche 1 bis 6, **dadurch gekennzeichnet, dass** das von der ersten Lichtquelle (14) und von der zweiten Lichtquelle (18) ausgestrahlte Licht mit einer konstanten Modulationsfrequenz moduliert ist und der mindestens eine erste Empfänger (22) die Modulationsfrequenz bevorzugt detektiert.

8. Sensorsystem nach einem der Ansprüche 1 bis 6, **dadurch gekennzeichnet, dass** die erste Lichtquelle (14) und die zweite Lichtquelle (18) jeweils Licht in einer konstanten Frequenz gepulst abstrahlen, wobei die Frequenzen verschieden voneinander sind, wobei der mindestens eine erste Empfänger (22) Signale auswertet, die die Frequenz aufweisen.

9. Sensorsystem nach einem der Ansprüche 1 bis 8, **dadurch gekennzeichnet, dass** die erste (16) und die zweite Strahlachse (20) nicht deckungsgleich sind.

10. Sensorsystem nach einem der Ansprüche 2 bis 9, **dadurch gekennzeichnet, dass** die dritte (24) und die vierte (32) Strahlachse nicht deckungsgleich sind.

11. Sensorsystem nach einem der Ansprüche 1 bis 10, **dadurch gekennzeichnet, dass** Sensorsystem (10) einen akustischen Signalgeber zur Ausgabe eines Messergebnisses aufweist.

12. Verfahren zum Bestimmen einer optischen Eigenschaft einer Pflanze (12) mittels einer Reflexionsmessung, wobei mittels einer ersten Lichtquelle (14) Licht in einem ersten Wellenlängenbereich entlang einer ersten Strahlachse (16) ausgestrahlt wird, und mittels einer zweiten Lichtquelle (18) Licht in einem zweiten Wellenlängenbereich entlang einer zweiten Strahlachse (20) ausgestrahlt wird, wobei von der Pflanze (12) reflektiertes Licht von mindestens einem ersten Empfänger (22), der entlang einer dritten Strahlachse (24) ausgerichtet ist, erfasst wird, wobei die erste Lichtquelle (14), die zweite Lichtquelle (18) und der mindestens eine erste Empfänger (22) derart relativ zueinander angeordnet werden, dass ein jeweils entlang der ersten Strahlachse (16) und der zweiten Strahlachse (20) verlaufender Zielzylinder (26, 26') und ein entlang der dritten Strahlachse (24) verlaufender erster Messzylinder (28) einander in einem Messraum (58) zumindest teilweise überlappen und die erste Strahlachse (16) und die zweite Strahlachse (20) jeweils einen Winkel (α, δ) mit der dritten Strahlachse (24) einschließen, **dadurch gekennzeichnet, dass**

eine Befestigung (38) der ersten (14) und der zweiten (18) Lichtquelle und des mindestens einen ersten Empfängers (22) derart vorgesehen ist, dass die Winkel (α, β, γ, δ) zwischen den Strahlachsen (16, 20) der Lichtquellen (14, 18) und der Strahlachse (24, 32) des mindestens einen Empfängers (22, 30) und ein Abstand zwischen den Lichtquellen (14, 18) und dem mindestens einen Empfänger (22, 30) eingestellt werden können, um den Messraum (58) einzustellen, und dass

der Zielzylinder (26) der ersten Lichtquelle (14) und der Zielzylinder (26') der zweiten Lichtquelle (18) in dem Messraum (58) jeweils einen Durchmesser von 1 mm bis 6 mm aufweisen, wobei der Messzylinder (28, 28') des mindestens einen Empfängers (22, 30) in dem Messraum (58) einen Durchmesser von 8 mm aufweist.

**Claims**

1. Sensor system (10) for determining an optical property of a plant (12) by means of a reflection measurement, having a first light source (14), which emits light along a first beam axis (16), and a second light source (18), which emits light along a second beam axis (20), and at least one first receiver (22), which is aligned along a third beam axis (24), to detect light reflected from the plant (12), wherein the first light source (14), the second light source (18), and the at least one first receiver (22) are arranged relative to one another in such a manner that a target cylinder (26, 26'), which respectively extends along the first beam axis (16) and the second beam axis (20), and a first measuring cylinder (28), which extends along the third beam axis (24), at least partially overlap one another in a measuring space (58), and the first beam axis (16) and the second beam axis (20) respectively enclose an angle (α, δ) with the third beam axis (24), **characterized in that** a fastening (38) of the first light source (14) and of the second light source (18) and of the at least one first receiver (22) is provided such that the angles (α, β, γ, δ) between the beam axes (16, 20) of the light sources (14, 18) and the beam axis (24, 32) of the at least one receiver (22, 30) and a distance between the light sources (14, 18) and the at least one receiver (22, 30) can be adjusted in order to adjust the measuring space (58), and **in that** the target cylinder (26) of the first light source (14) and the target cylinder (26') of the second light source (18) in the measuring space (58) each have a diameter of 1 mm to 6 mm, wherein the measuring cylinder (28, 28') of the at least one receiver (22, 30) in the measuring space (58) has a diameter of 8 mm.

2. Sensor system according to Claim 1, **characterized in that** a second receiver (30) is provided, wherein the second receiver (30) is aligned along a fourth beam axis (32) in such a manner that a second measuring cylinder (28'), which extends along the fourth beam axis (32), and the first measuring cylinder (28) and the target cylinders (26, 26') at least partially overlap one another in the measuring space (58), and the first beam axis (16) and the second beam axis (20) respectively enclose an angle (β, γ) with the fourth beam axis (32).

3. Sensor system according to Claim 1 or 2, **characterized in that** the first light source (14) and the second light source (18) are arranged in a first housing (34), and the at least one first receiver (22) is arranged in a second housing (36).

4. Sensor system according to any one of Claims 1 to 3, **characterized in that** the first light source (14) emits light in a first wavelength range and the second light source (18) emits light in a second wavelength range.

5. Sensor system according to Claim 4, **characterized in that** each receiver (22, 30) has an optical bandpass filter (42, 44), which is transmissive for light of the first wavelength range and/or of the second wavelength range.

6. Sensor system according to Claim 4 or 5, **characterized in that** the first wavelength range is a wavelength range of green light and the second wavelength range is a wavelength range of red light.

7. Sensor system according to any one of Claims 1 to 6, **characterized in that** the light emitted by the first light source (14) and by the second light source (18) is modulated with a constant modulation frequency and the at least one first receiver (22) preferably detects the modulation frequency.

8. Sensor system according to any one of Claims 1 to 6, **characterized in that** the first light source (14) and the second light source (18) each emit light pulsed in a constant frequency, wherein the frequencies are different from one another, wherein the at least one first receiver (22) analyzes signals which have the frequency.

9. Sensor system according to any one of Claims 1 to 8, **characterized in that** the first beam axis (16) and the second beam axis (20) are not congruent.

10. Sensor system according to any one of Claims 2 to 9, **characterized in that** the third beam axis (24) and the fourth beam axis (32) are not congruent.

11. Sensor system according to any one of Claims 1 to 10, **characterized in that** the sensor system (10) has an acoustic signal generator to output a measurement result.

12. Method for determining an optical property of a plant (12) by means of a reflection measurement, wherein light in a first wavelength range is emitted along a first beam axis (16) by means of a first light source (14), and light in a second wavelength range is emitted along a second beam axis (20) by means of a second light source (18), wherein light reflected from the plant (12) is detected by at least one first receiver (22), which is aligned along a third beam axis (24), wherein the first light source (14), the second light source (18), and the at least one first receiver (22) are arranged relative to one another in such a manner that a target cylinder (26, 26'), which respectively extends along the first beam axis (16) and the second beam axis (20), and a first measuring cylinder (28), which extends along the third beam axis (24), at least partially overlap one another in a measuring space (58), and the first beam axis (16) and the second beam axis (20) respectively enclose an angle $(\alpha, \delta)$ with the third beam axis (24) **characterized in that** a fastening (38) of the first light source (14) and of the second light source (18) and of the at least one first receiver (22) is provided such that the angles $(\alpha, \beta, \gamma, \delta)$ between the beam axes (16, 20) of the light sources (14, 18) and the beam axis (24, 32) of the at least one receiver (22, 30) and a distance between the light sources (14, 18) and the at least one receiver (22, 30) can be adjusted in order to adjust the measuring space (58), and **in that** the target cylinder (26) of the first light source (14) and the target cylinder (26') of the second light source (18) in the measuring space (58) each have a diameter of 1 mm to 6 mm, wherein the measuring cylinder (28, 28') of the at least one receiver (22, 30) in the measuring space (58) has a diameter of 8 mm.

**Revendications**

1. Système de capteurs (10) pour la détermination d'une propriété optique d'une plante (12) au moyen d'une mesure de réflexion, comportant une première source de lumière (14), qui émet de la lumière le long d'un premier axe de rayonnement (16), et une deuxième source de lumière (18), qui émet de la lumière le long d'un deuxième axe de rayonnement (20), et au moins un premier récepteur (22), qui est orienté le long d'un troisième axe de rayonnement (24) pour détecter la lumière réfléchie par la plante (12), dans lequel la première source de lumière (14), la deuxième source de lumière (18) et l'au moins un premier récepteur (22) sont agencés les uns par rapport aux autres de telle sorte qu'un cylindre cible respectif (26, 26') s'étendant le long du premier axe de rayonnement (16) et du deuxième axe de rayonnement (20) et qu'un premier cylindre de mesure (28) s'étendant le long du troisième axe de rayonnement (24) se chevauchent au moins partiellement dans un espace de mesure (58) et que le premier axe de rayonnement (16) et le deuxième axe de rayonnement (20) forment respectivement un angle $(\alpha, \delta)$ avec le troisième axe de rayonnement (24), **caractérisé en ce qu'**il est prévu un élément de fixation (38) des première (14) et deuxième (18) sources de lumière et de l'au moins un premier récepteur (22) de manière à pouvoir régler les angles $(\alpha, \beta, \gamma, \delta)$ formés entre les axes de rayonnement (16, 20) des sources de lumière (14, 18) et l'axe de rayonnement (24, 32) de l'au moins un récepteur (22, 30) et une distance entre les sources de lumière (14, 18) et l'au moins un récepteur (22, 30) afin de régler la chambre de mesure (58), et **en ce que** le cylindre cible (26) de la première source de lumière (14) et le cylindre cible (26') de la deuxième source de lumière (18) présentent respectivement dans l'espace de mesure (58) un diamètre de 1 mm à 6 mm, dans lequel le cylindre de mesure (28, 28') de l'au moins un récepteur (22, 30) de la chambre de mesure (58) présente un diamètre de 8 mm.

2. Système de capteurs selon la revendication 1, **caractérisé en ce qu'**il est prévu un deuxième récepteur (30), dans lequel le deuxième récepteur (30) est orienté le long d'un quatrième axe de rayonnement (32) de telle sorte qu'un deuxième cylindre de mesure (28') s'étend le long du quatrième axe de rayonnement (32) et du premier cylindre de mesure (28) et que les cylindres cibles (26, 26') se chevauchent au moins partiellement dans l'espace de mesure (58) et que le premier axe de rayonnement (16) et le deuxième axe de rayonnement (20) forment respectivement un angle ($\beta$, $\gamma$) avec le quatrième axe de rayonnement (32).

3. Système de capteurs selon la revendication 1 ou 2, **caractérisé en ce que** les première (14) et deuxième (18) sources lumineuses sont disposées dans un premier boîtier (34) et **en ce que** l'au moins un premier récepteur (22) est disposé dans un deuxième boîtier (36).

4. Système de capteurs selon l'une des revendications 1 à 3, **caractérisé en ce que** la première source de lumière (14) émet de la lumière dans une première gamme de longueurs d'onde et **en ce que** la deuxième source de lumière (18) émet de la lumière dans une deuxième gamme de longueurs d'onde.

5. Système de capteurs selon la revendication 4, **caractérisé en ce que** chaque récepteur (22, 30) comporte un filtre passe-bande optique (42, 44) qui est transparent à la lumière de la première plage de longueurs d'onde et/ou de la deuxième plage de longueurs d'onde.

6. Système de capteurs selon la revendication 4 ou 5, **caractérisé en ce que** la première plage de longueurs d'onde est une plage de longueurs d'onde de lumière verte et **en ce que** la deuxième plage de longueurs d'onde est une plage de longueurs d'onde de lumière rouge.

7. Système de capteurs selon l'une des revendications 1 à 6, **caractérisé en ce que** la lumière émise par la première source de lumière (14) et par la deuxième source de lumière (18) est modulée avec une fréquence de modulation constante et **en ce que** l'au moins un premier récepteur (22) détecte préférentiellement la fréquence de modulation.

8. Système de capteurs selon l'une des revendications 1 à 6, **caractérisé en ce que** la première source de lumière (14) et la deuxième source de lumière (18) émettent respectivement de la lumière pulsée à une fréquence constante, dans lequel les fréquences sont différentes les unes des autres, dans lequel l'au moins un premier récepteur (22) évalue des signaux qui présentent ladite fréquence.

9. Système de capteurs selon l'une des revendications 1 à 8, **caractérisé en ce que** les premier (16) et deuxième (20) axes de rayonnement ne coïncident pas.

10. Système de capteurs selon l'une des revendications 2 à 9, **caractérisé en ce que** les troisième (24) et quatrième (32) axes de rayonnement ne coïncident pas.

11. Système de capteurs selon l'une des revendications 1 à 10, **caractérisé en ce que** le système de capteurs (10) comporte un émetteur de signaux acoustiques destiné à délivrer un résultat de mesure.

12. Procédé pour la détermination d'une propriété optique d'une plante (12) au moyen d'une mesure de réflexion, dans lequel de la lumière est émise dans une première gamme de longueurs d'onde le long d'un premier axe de rayonnement (16) au moyen d'une première source de lumière (14), et de la lumière est émise dans une deuxième gamme de longueurs d'onde le long d'un deuxième axe de rayonnement (20) au moyen d'une deuxième source de lumière (18), dans lequel la lumière réfléchie par la plante (12) est détectée par au moins un premier récepteur (22), qui est orienté le long d'un troisième axe de rayonnement (24), dans lequel la première source de lumière (14), la deuxième source de lumière (18) et l'au moins un premier récepteur (22) sont agencés les uns par rapport aux autres de telle sorte qu'un cylindre cible (26, 26') s'étendant respectivement le long du premier axe de rayonnement (16) et du deuxième axe de rayonnement et qu'un premier cylindre de mesure (28) s'étendant le long du troisième axe de rayonnement (24) se chevauchent au moins partiellement dans un espace de mesure (58) et que le premier axe de rayonnement (16) et le deuxième axe de rayonnement (20) forment respectivement un angle ($\alpha$, $\delta$) avec le troisième axe de rayonnement (24),
**caractérisé en ce qu'**il est prévu un élément de fixation (38) des première (14) et deuxième (18) sources de lumière et de l'au moins un premier récepteur (22) de manière à pouvoir régler les angles ($\alpha$, $\beta$, $\gamma$, $\delta$) formés entre les axes de rayonnement (16, 20) des sources de lumière (14, 18) et l'axe de rayonnement (24, 32) de l'au moins un récepteur (22, 30) et une distance entre les sources de lumière (14, 18) et l'au moins un récepteur (22, 30) afin de régler la chambre de mesure (58), et **en ce que** le cylindre cible (26) de la première source de lumière (14) et le cylindre cible (26') de la deuxième source de lumière (18) présentent respectivement dans l'espace de mesure (58) un diamètre de 1 mm à 6 mm, dans lequel le cylindre de mesure (28, 28') de l'au moins un récepteur (22, 30) de la chambre de mesure (58) présente un diamètre de 8 mm.

Fig. 1

Fig. 2

Fig. 4

Fig. 5

Fig. 6

Fig. 3

68

70 — START

72 — BESTIMMEN VON $\rho_{ROT}$ UND VON $\rho_{GRÜN}$

73 — SCHWELL-WERTBEREICH VERLASSEN ? — JA

NEIN

74 — LNNDVI = $\ln(\rho_{GRÜN}-\rho_{ROT})$ $-\ln(\rho_{ROT})$

76 — ERROR ? — JA — 78 VERWERFEN DES WERTEPAARES — 80 STOP

NEIN

82 — BERECHNEN LNNDVI

84 — STOP

Fig. 7

85

Start — 70

Bestimmen von
$\rho_{rot}$ und $\rho_{grün}$ — 72

73
Schwellwert-
Bereich
verlassen
?

Ja

Nein

86
$A_Q = K_1 \cdot \dfrac{\rho_{rot}}{\rho_{grün}}$

88
$A_Q = +30$ bis $+75$?

Nein

92
$A_Q = +100$ bis $+200$?

Nein

78
Verwerfen des
Wertepaares

Ja

Ja

gesundes Blatt
mit normalem
Chlorophyllgehalt

Boden, Blattkrankheit,
Schädlingsbefall

80
Stop

Anzeige des
Chlorophyllgehaltes

Anzeige des
Bodenwertes oder
Schädlingsbefalls
oder der
Blattkrankheit

90

94

Fig. 8

95

Start — 70

Bestimmen von $\rho_{rot}$ und $\rho_{grün}$ — 72

Schwellwert-Bereich verlassen ? — 73

Ja

Nein

$$A_{ln} = \frac{K_2}{\ln\rho_{grün} - \ln\rho_{rot}}$$ — 96

$A_{ln} = +20$ bis $+200$? — 98

Nein

$A_{ln} = -10$ bis $-4000$? — 102

Nein

Verwerfen des Wertepaares — 78

Ja

gesundes Blatt mit normalem Chlorophyllgehalt

Ja

Boden, Blattkrankheit, Schädlingsbefall

Stop — 80

Anzeige des Chlorophyllgehaltes — 100

Anzeige des Bodenwertes oder Schädlingsbefalls oder der Blattkrankheit — 104

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080239293 A1
- EP 1125111 B1
- DE 60306675 T2
- WO 02088679 A1
- US 5837977 A
- WO 9402812 A1
- US 4804850 A
- US 2005098713 A1
- WO 2006007833 A1
- JP 2004294075 A